# EUROPÄISCHE PATENTSCHRIFT

(11) **EP 2 894 829 B1**
(45) Veröffentlichungstag und Bekanntmachung des Hinweises auf die Patenterteilung: **07.06.2023**
(21) Anmeldenummer: 15150433.9
(22) Anmeldetag: 08.01.2015
(51) Int. Cl.: H04L 9/40, H04L 9/08, H04L 9/32

(54) **Verfahren zum geschützten Übermitteln eines Datenobjekts**
Method for secure transmission of a data object
Procédé de transmission protégée d'un objet de données

(30) Priorität: 09.01.2014 DE 102014100173
(43) Veröffentlichungstag der Anmeldung: 15.07.2015
(73) Patentinhaber: KOBIL GmbH, 67547 Worms (DE)
(72) Erfinder: Koyun, Ismet, 67550 Worms (DE); Ruppert, Markus, 64297 Darmstadt (DE)
(74) Vertreter: Cohausz & Florack

(56) Entgegenhaltungen:
- WO-A2-01/97432
- US-A- 6 061 448
- US-A1- 2003 147 536
- US-A1- 2008 086 646
- US-A1- 2013 024 686

## Beschreibung

### Gebiet der Erfindung

Die vorliegende Erfindung betrifft unter anderem ein Verfahren zum geschützten Übermitteln eines Datenobjekts.

### Hintergrund der Erfindung

Im Stand der Technik sind Lösungen zum geschützten Übermitteln von Datenobjekte über das Internet. Eine Form der geschützten Datenübermittlung sind verschlüsselte und/oder signierte Emails. Diese Form der Datenübermittlung ist weit verbreitet und standardisiert. Allerdings sind die Vorbereitungen für die Nutzung dieser Technologie meist sehr aufwendig, da zwischen dem Absender und dem Adressaten vor dem eigentlichen Übermitteln der Datenobjekte ein oder mehrere Schlüssel oder Zertifikate zum Verschlüsseln der Daten ausgetauscht werden müssen. So muss der Adressat dem Absender im Falle eines asymmetrischen Verschlüsselungsverfahrens zunächst seinen öffentlichen Schlüssel zum Verschlüsseln der Datenobjekte mitteilen, damit der Absender die Datenobjekte anschließend mit dem öffentlichen Schlüssel des Adressaten verschlüsseln und geschützt an den Adressaten übertragen kann. Der Adressat kann die verschlüsselten Datenobjekte mit seinem privaten Schlüssel entschlüsseln. Dies ist besonders aufwendig, wenn es sich nicht um geschlossene Benutzergruppen (z.B. innerhalb einer Organisation) handelt, bei denen eine zentrale Administration für eine reibungslose Funktion sorgt. Außerdem werden bei dieser Form der geschützten Datenübermittlung alle an den Adressaten zu übermittelnden Datenobjekte mit dem gleichen öffentlichen Schlüssel des Adressaten verschlüsselt. Ein Angreifer der den privaten Schlüssel des Adressaten erbeutet, kann daher alle verschlüsselten Datenobjekte, die an diesen Adressaten übermittelt werden, entschlüsseln. Die Dokumente US 2003/147536, US 2013/024686, WO 01/97432 und US 6 601 448 offenbaren den relevanten Stand der Technik.

### Zusammenfassung einiger beispielhafter Ausgestaltungen der vorliegenden Erfindung

Die vorliegende Erfindung wird in den angefügten Ansprüchen definiert. Eine Aufgabe der vorliegenden Erfindung ist es deshalb, die oben genannten Nachteile zu überwinden. Insbesondere soll die vorliegende Erfindung auch für offene Benutzergruppen, die problemlos auf neue Benutzer ausgedehnt werden können und die ohne eine zentrale Administration auskommen, eine einfache Möglichkeit zum geschützten Übermitteln von Datenobjekten bereitstellen. In einer offenen Benutzergruppe kennen Kommunikationspartner beispielsweise nur die E-Mail-Adressen voneinander, aber sonst nichts weiter.

Diese Aufgabe wird gelöst durch den Gegenstand des Hauptanspruchs und der nebengeordneten Ansprüche. Vorteilhafte beispielhafte Ausgestaltungen der Erfindung sind den Unteransprüchen zu entnehmen.

Ein erstes erfindungsgemäßes Verfahren umfasst das Empfangen von Identifizierungsinformationen über einen Adressaten, an den ein verschlüsseltes Datenobjekt von einer Sendeeinrichtung gesendet oder dem das verschlüsseltes Datenobjekt, durch die Sendeeinrichtung, zum Abrufen bereitgestellt werden soll, von der Sendeeinrichtung an einem Server, das Assoziieren der Identifizierungsinformationen mit einem Schlüssel zum Entschlüsseln des verschlüsselten Datenobjekts durch den Server, und das Senden des Schlüssels zum Entschlüsseln des verschlüsselten Datenobjekts an den Adressaten durch den Server oder das Bereitstellen, durch den Server, des Schlüssels zum Entschlüsseln des verschlüsselten Datenobjekts zum Abrufen durch den Adressaten.

Ein zweites erfindungsgemäßes Verfahren umfasst das Verschlüsseln eines Datenobjekts durch eine Sendeeinrichtung derart, dass es mit einem Schlüssel zum Entschlüsseln des verschlüsselten Datenobjekts entschlüsselbar ist, das Senden von Identifizierungsinformationen über einen Adressaten des verschlüsselten Datenobjekts von der Sendeeinrichtung an einen Server, und das Senden des verschlüsselten Datenobjekts von der Sendeeinrichtung an den Adressaten oder das Bereitstellen, durch die Sendeeinrichtung, des verschlüsselten Datenobjekts zum Abrufen durch den Adressaten. Ein drittes erfindungsgemäßes Verfahren umfasst das Erhalten eines verschlüsselten Datenobjekts an einer Empfangseinrichtung, das Empfangen eines Schlüssels zum Entschlüsseln des verschlüsselten Datenobjekts von einem Server an der Empfangseinrichtung, und das Entschlüsseln des verschlüsselten Datenobjekts durch die Empfangseinrichtung.

Ein viertes erfindungsgemäße Verfahren zum geschützten Übermitteln eines Datenobjekts umfasst die Schritte des ersten erfindungsgemäßen Verfahrens, die zum Beispiel auf einem Server ablaufen, die Schritte des zweiten erfindungsgemäßen Verfahrens, die zum Beispiel auf einer Sendeeinrichtung ablaufen, und die Schritte des dritten erfindungsgemäßen Verfahrens, die zum Beispiel auf einer Empfangseinrichtung ablaufen. Die Schritte des ersten, des zweiten und des dritten erfindungsgemäßen Verfahrens sollen somit vorzugsweise als korrespondierende Schritte des vierten erfindungsgemäßen Verfahrens zum geschützten Übermitteln eines verschlüsselten Datenobjekts verstanden werden, die beispielsweise in einem System, umfassend den Server, die Sendeeinrichtung und die Empfangseinrichtung, ablaufen können.

Zum Beispiel betreffen die erfindungsgemäßen Verfahren jeweils denselben Server, dieselbe Sendeeinrichtung und dieselbe Empfangseinrichtung. Die Sendeeinrichtung, die Empfangseinrichtung und der Server sind zum Beispiel voneinander verschiedene Datenverarbeitungsanlagen. Vorzugsweise ist die Sendeeinrichtung eine erfindungsgemäße Sendeeinrichtung, die Empfangseinrichtung eine erfindungsgemäße Empfangseinrichtung und der Server ein erfindungsgemäßer Server.

Das Datenobjekt des ersten erfindungsgemäßen Verfahrens entspricht beispielsweise dem Datenobjekt des zweiten und dritten erfindungsgemäßen Verfahrens. Das Datenobjekt kann zum Beispiel vertrauliche Informationen enthalten, die von einem Absender an den Adressaten übermittelt (d.h. an den Adressaten gesendet oder zum Abrufen durch den Adressaten bereitgestellt) werden sollen. Das Datenobjekt ist zum Beispiel eine Nachricht. Dabei ist der Absender beispielsweise ein Benutzer der Sendeeinrichtung, und der Adressat ist beispielsweise ein Benutzer der Empfangseinrichtung. Zum Beispiel veranlasst der Absender, dass die Sendeeinrichtung das verschlüsselte Datenobjekt an den Adressaten sendet oder zum Abrufen durch den Adressaten bereitstellt. Zum Beispiel veranlasst der Adressat, dass die Empfangseinrichtung das verschlüsselte Datenobjekt erhält.

Das verschlüsselte Datenobjekt kann von der Sendeeinrichtung an den Adressaten zumindest teilweise über ein Netzwerk oder mehrere Netzwerke gesendet oder zum Abrufen durch den Adressaten zumindest teilweise über ein Netzwerk oder mehrere Netzwerke bereitgestellt werden. Beispiele für ein Netzwerk sind ein lokales Netzwerk (LAN) wie ein Ethernet-Netzwerk oder ein IEEE 802-Netzwerk, ein großräumiges Netzwerk (WAN), ein drahtloses Netzwerk, ein drahtgebundenes Netzwerk, ein Mobilfunknetzwerk, ein Telefonnetzwerk und/oder das Internet.

Unter Senden des verschlüsselten Datenobjekts von der Sendeeinrichtung an den Adressaten soll zum Beispiel verstanden werden, dass das verschlüsselte Datenobjekt derart an den Adressaten gesendet wird, dass dieser es an der Empfangseinrichtung erhalten kann. Insbesondere soll unter Senden des verschlüsselten Datenobjekts von der Sendeeinrichtung an den Adressaten zum Beispiel verstanden werden, dass das verschlüsselte Datenobjekt als Teil einer elektronischen Nachricht von der Sendeeinrichtung über ein Netzwerk an eine elektronische Nachrichtenadresse des Adressaten versendet wird und/oder dass das verschlüsselte Datenobjekt in einem oder mehreren Datenpaketen übertragen wird. Beispiele für eine elektronische Nachricht sind eine E-Mail, eine DE-Mail, eine Kurzmitteilung wie SMS und MMS und/oder eine über einen sogenannten Messengerdienst wie WhatsApp und Skype versendete Nachricht. Beispiele für ein Datenpaket sind ein TCP-Segment und/oder IP-Datagramm.

Unter Bereitstellen, durch die Sendeeinrichtung, des verschlüsselten Datenobjekts zum Abrufen durch den Adressaten soll zum Beispiel verstanden werden, dass das verschlüsselte Datenobjekt derart zum Abrufen durch den Adressaten bereitgestellt wird, dass dieser es an der Empfangseinrichtung erhalten kann. Insbesondere soll unter Bereitstellen des verschlüsselten Datenobjekts zum Abrufen durch den Adressaten zum Beispiel verstanden werden, dass die Sendeeinrichtung das verschlüsselte Datenobjekt zum Herunterladen über ein Netzwerk bereitstellt, dass die Sendeeinrichtung das verschlüsselte Datenobjekt über ein Netzwerk an einen Downloadserver (z.B. einen Downloadserver eines Clouddienstes wie Dropbox und Rapidshare) überträgt, wobei der Downloadserver das verschlüsselte Datenobjekt zum Herunterladen über ein Netzwerk bereitstellt und/oder dass die Sendeeinrichtung das verschlüsselte Datenobjekt auf einem Datenträger (z.B. einer DVD, einer Diskette, einer tragbaren Festplatte, einem Wechseldatenträger und/oder einem tragbaren Speicherstick) bereitstellt.

Unter Erhalten des verschlüsselten Datenobjekts durch die Empfangseinrichtung soll zum Beispiel verstanden werden, dass das verschlüsselte Datenobjekt durch die Empfangseinrichtung von der Sendeeinrichtung oder einem Downloadserver über ein Netzwerk heruntergeladen wird, dass das verschlüsselte Datenobjekt als Teil einer elektronischen Nachricht an der Empfangseinrichtung über ein Netzwerk empfangen wird und/oder dass das verschlüsselte Datenobjekt von einem Datenträger in die Empfangseinrichtung eingelesen wird. Zum Beispiel veranlasst der Adressat, dass die Empfangseinrichtung das verschlüsselte Datenobjekt erhält.

Um das Datenobjekt und/oder die in dem Datenobjekt enthaltenen Informationen auf dem Übertragungsweg von der Sendeeinrichtung an die Empfangseinrichtung (z.B. in dem Netzwerk) zu schützen, verschlüsselt die Sendeeinrichtung das Datenobjekt vor dem Senden oder vor dem Bereitstellen zum Abrufen. Zum Beispiel kann das Datenobjekt mit einem symmetrischen, einem hybriden oder einem asymmetrischen Verschlüsselungsverfahren derart verschlüsselt werden, dass es nur mit dem Schlüssel zum Entschlüsseln des verschlüsselten Datenobjekts entschlüsselbar ist. Beispiele für ein Verschlüsselungsverfahren sind Verschlüsselungsverfahren nach dem PKCS#7-Standard, dem S/MIME-Standard und/oder dem PGP-Standard.

Der Schlüssel zum Entschlüsseln des verschlüsselten Datenobjekts des ersten erfindungsgemäßen Verfahrens entspricht beispielsweise dem Schlüssel zum Entschlüsseln des verschlüsselten Datenobjekts des zweiten und dritten erfindungsgemäßen Verfahrens.

Die Identifizierungsinformationen des ersten erfindungsgemäßen Verfahrens entsprechen beispielsweise den Identifizierungsinformationen des zweiten erfindungsgemäßen Verfahrens. Zum Beispiel sollen die Identifizierungsinformationen eine Identifizierung des Adressaten durch den Server, eine Authentifizierung des Adressaten durch den Server und/oder eine Kontaktaufnahme mit dem Adressaten durch den Server ermöglichen. Die Identifizierungsinformationen enthalten zum Beispiel eine elektronische Nachrichtenadresse des Adressaten (z.B. eine E-Mail-Adresse oder eine DE-Mail-Adresse des Adressaten), eine Identifizierungsnummer des Adressaten (z.B. eine Kundenummer oder eine Registrierungsnummer des Adressaten), einen Benutzernamen des Adressaten, den Namen des Adressaten, die Anschrift des Adressaten und/oder eine Telefonnummer des Adressaten. Zum Beispiel werden die Identifizierungsinformationen von dem Absender an der Sendeeinrichtung zumindest teilweise eingegeben und/oder ausgewählt (z.B. aus einem elektronischen Adressbuch ausgewählt).

Unter Assoziieren der Identifizierungsinformationen mit dem Schlüssel zum Entschlüsseln des verschlüsselten Datenobjekts durch den Server soll zum Beispiel verstanden werden, dass der Server den Adressaten anhand der Identifizierungsinformationen als beim Server registrierten Benutzer identifiziert und diesem registrierten Benutzer den Schlüssel zum Entschlüsseln des verschlüsselten Datenobjekts (logisch) zuordnet und/oder dass der Server den Identifizierungsinformationen den Schlüssel zum Entschlüsseln des verschlüsselten Datenobjekts (logisch) zuordnet.

Zum Beispiel kann die Zuordnung, falls der Adressat anhand der Identifizierungsinformationen durch den Server als registrierter Benutzer identifizierbar ist, in einem mit dem Adressaten assoziierten Eintrag in einer Benutzerdatenbank, die sich in einem Speicher des Servers befindet, gespeichert werden. Falls der Adressat anhand der Identifizierungsinformationen durch den Server nicht als registrierter Benutzer identifizierbar ist, kann er beispielsweise von dem Server zur Registrierung beim Server aufgefordert werden. Zum Beispiel kann der Server an die elektronische Nachrichtenadresse des Adressaten, an die Anschrift des Adressaten oder an die Telefonnummer des Adressaten eine Nachricht mit einer Aufforderung und Anweisungen zur Registrierung beim Server übertragen oder zum Übertragen bereitstellen. Zum Beispiel sendet der Server an die E-Mail-Adresse des Adressaten eine E-Mail mit einem Link und/oder einem Aktivierungscode für eine Registrierung beim Server. Es sind jedoch auch andere oder zusätzliche Registrierungsschritte denkbar, wie die Durchführung eines Postldent-Verfahrens.

Bei der Registrierung gibt der Adressat zum Beispiel Registrierungsinformationen an und/oder erhält zum Beispiel Registrierungsinformationen. Zum Beispiel sollen die Registrierungsinformationen eine Identifizierung des Adressaten durch den Server, eine Authentifizierung des Adressaten durch den Server und/oder eine Kontaktaufnahme mit dem Adressaten durch den Server ermöglichen. Die Registrierungsinformationen enthalten zum Beispiel eine elektronische Nachrichtenadresse (z.B. eine E-Mail-Adresse oder eine DE-Mail-Adresse), eine Identifizierungsnummer (z.B. eine Kundenummer oder eine Registrierungsnummer), einen Benutzernamen, einen Namen, eine Anschrift, eine Telefonnummer, ein Authentisierungsmerkmal und/oder ein Passwort. Die Registrierungsinformationen können in einem neuen mit dem Adressaten assoziierten Eintrag in der Benutzerdatenbank gespeichert.

Zum Beispiel kann die Zuordnung in einem entsprechenden Eintrag in einer anderen Datenbank wie einer Schlüsseldatenbank oder einer Identifizierungsinformationendatenbank, die sich in einem Speicher des Servers befindet, gespeichert werden. Diese Variante kann ohne eine Registrierung des Adressaten beim Server durchgeführt werden, sie ist aber auch in Verbindung mit einer Registrierung des Adressaten beim Server denkbar. Zum Beispiel kann die Zuordnung in einem entsprechenden Eintrag in der anderen Datenbank, die sich in einem Speicher des Servers befindet, gespeichert werden, falls der Adressat anhand der Identifizierungsinformationen durch den Server nicht als registrierter Benutzer identifizierbar ist.

Unter Senden des Schlüssels zum Entschlüsseln des verschlüsselten Datenobjekts von dem Server an den Adressaten soll zum Beispiel verstanden werden, dass der Schlüssel zum Entschlüsseln des verschlüsselten Datenobjekts an eine elektronische Nachrichtenadresse des Adressaten versendet wird, dass der Schlüssel an eine Empfangseinrichtung des Adressaten gesendet wird und/oder dass der Schlüssel in einem oder mehreren Datenpaketen übertragen wird.

Zum Beispiel sendet der Server den Schlüssel zum Entschlüsseln des verschlüsselten Datenobjekts als Reaktion auf das Empfangen einer Anfrage nach dem Schlüssel zum Entschlüsseln des verschlüsselten Datenpakets an dem Server. Dies ist beispielsweise vorteilhaft, um vor dem Senden des Schlüssels zum Entschlüsseln des verschlüsselten Datenobjekts an den Adressaten eine Authentifizierung des Adressaten durchführen zu können.

Es ist beispielsweise auch denkbar, dass der Server Schlüssel zum Entschlüsseln von verschlüsselten Datenobjekten, periodisch oder unmittelbar nach dem Erzeugen der Schlüssel sendet, zum Beispiel in Form einer "Push"-Übertragung. Beispielsweise wird der Schlüssel zum Entschlüsseln des verschlüsselten Datenobjekts unmittelbar nach dem Erzeugen oder mit zeitlichem Abstand zum Erzeugen an den Adressaten gesendet. Zum Beispiel wird der Schlüssel zum Entschlüsseln des verschlüsselten Datenobjekts an den Adressaten gesendet, ohne dass der Server eine entsprechende Anfrage empfangen hat. Dies ist beispielsweise vorteilhaft, da der Adressat den Schlüssel unaufgefordert erhält.

Unter Bereitstellen, durch den Server, des Schlüssels zum Entschlüsseln des verschlüsselten Datenobjekts zum Abrufen durch den Adressaten soll zum Beispiel verstanden werden, dass der Server den Schlüssel zum Entschlüsseln des verschlüsselten Datenpakets zum Herunterladen über ein Netzwerk bereitstellt und/oder dass der Server den Schlüssel zum Entschlüsseln des verschlüsselten Datenpakets über ein Netzwerk an einen Downloadserver (z.B. einen Downloadserver eines Clouddienstes wie Dropbox und Rapidshare) überträgt, wobei der Downloadserver den Schlüssel zum Entschlüsseln des verschlüsselten Datenpakets zum Herunterladen über ein Netzwerk bereitstellt.. Zum Beispiel stellt der Server den Schlüssel zum Entschlüsseln des verschlüsselten Datenobjekts zum Abrufen durch den Adressaten bereit und sendet eine elektronische Nachricht mit einem Link zum Abrufen des Schlüssels zum Entschlüsseln des verschlüsselten Datenobjekts an eine elektronische Nachrichtenadresse des Adressaten.

Zum Beispiel wird der Schlüssel zum Entschlüsseln des verschlüsselten Datenobjekts von dem Server verschlüsselt an den Adressaten gesendet oder zum Abrufen durch den Adressaten bereitgestellt. Zum Beispiel wird der Schlüssel zum Entschlüsseln des verschlüsselten Datenobjekts in einer HTTPS-Verbindung von dem Server an die Empfangseinrichtung des Adressaten gesendet oder von der Empfangseinrichtung des Adressaten abgerufen.

Erst wenn die Empfangseinrichtung den Schlüssel zum Entschlüsseln des Datenobjekts empfängt und (zwischen-)speichert, haben die Empfangseinrichtung und der Adressat zum Beispiel Kenntnis von dem Schlüssel zum Entschlüsseln des Datenobjekts und können das verschlüsselte Datenobjekt entschlüsseln. Zum Beispiel kennen weder der Adressat noch die Empfangseinrichtung den Schlüssel zum Entschlüsseln des verschlüsselten Datenobjekts zu dem Zeitpunkt, zu dem das Datenobjekt durch die Sendeeinrichtung gesendet oder zum Abrufen bereitgestellt wird. Zum Beispiel haben zu dem Zeitpunkt, zu dem das Datenobjekt gesendet oder zum Abrufen bereitgestellt wird, nur die Sendeeinrichtung und/oder der Server Kenntnis von dem Schlüssel zum Entschlüsseln des verschlüsselten Datenobjekts. Zum Beispiel haben weder der Adressat noch die Empfangseinrichtung Kenntnis von dem Schlüssel zum Entschlüsseln des verschlüsselten Datenobjekts, bevor eine Anfrage nach dem Schlüssel zum Entschlüsseln des verschlüsselten Datenobjekts von der Empfangseinrichtung an den Server gesendet wird.

Zum Beispiel ist der Server an dem Senden oder Bereitstellen zum Abrufen des verschlüsselten Datenobjekts nicht beteiligt. Dies ist beispielsweise vorteilhaft, wenn der Server den Schlüssel zum Entschlüsseln des verschlüsselten Datenobjekts kennt, um zu erreichen, dass das verschlüsselte Datenobjekt und der Schlüssel zum Entschlüsseln des verschlüsselten Datenobjekts auf dem Übertragungsweg von der Sendeeinrichtung zu der Empfangseinrichtung nicht gleichzeitig in einer Entität vorliegen.

Zum Beispiel wird das verschlüsselte Datenobjekt durch die Empfangseinrichtung nur zur Anzeige und/oder Bearbeitung durch den Adressaten entschlüsselt. Zum Beispiel wird es anschließend (also nach dem Anzeigen und/oder Bearbeiten) durch die Empfangseinrichtung wieder verschlüsselt und/oder das entschlüsselte Datenobjekt wird anschließend durch die Empfangseinrichtung gelöscht, so dass es dauerhaft nur verschlüsselt auf der Empfangseinrichtung gespeichert ist. Dies ist beispielsweise vorteilhaft, um einen Schutz des Datenobjekts auf der Empfangseinrichtung zu erreichen.

Alternativ ist jedoch auch denkbar, dass das Datenobjekt durch die Empfangseinrichtung zum Beispiel entschlüsselt und dauerhaft entschlüsselt in einem Speicher der Empfangseinrichtung gespeichert wird. In diesem Fall bietet die Verschlüsselung des Datenobjekts nur einen Schutz auf dem Übertragungsweg von der Sendeeinrichtung zu der Empfangseinrichtung.

Ein erfindungsgemäßer Server umfasst ein oder mehrere Mittel zur Ausführung der Schritte des ersten erfindungsgemäßen Verfahrens. Eine erfindungsgemäße Sendeeinrichtung umfasst ein oder mehrere Mittel zur Ausführung der Schritte des zweiten erfindungsgemäßen Verfahrens. Eine erfindungsgemäße Empfangseinrichtung umfasst ein oder mehrere Mittel zur Ausführung der Schritte des dritten erfindungsgemäßen Verfahrens.

Zum Beispiel sind der erfindungsgemäße Server, die erfindungsgemäße Sendeeinrichtung und die erfindungsgemäße Empfangseinrichtung voneinander verschiedene Datenverarbeitungsanlagen, die softwaremäßig und/oder hardwaremäßig eingerichtet sind, um die jeweiligen Schritte des jeweiligen erfindungsgemäßen Verfahrens ausführen zu können. Unter softwaremäßig und/oder hardwaremäßig eingerichtet soll zum Beispiel die Vorbereitung der jeweiligen Datenverarbeitungsanlage verstanden werden, die notwendig ist, um die Schritte eines jeweiligen Verfahrens beispielsweise in Form eines Computerprogramms ausführen zu können. Beispiele für eine Datenverarbeitungsanlage sind ein Computer, ein Desktop-Computer, ein tragbarer Computer wie ein Laptop-Computer, ein Tablet-Computer, ein persönlicher digitaler Assistent, ein Smartphone und/oder ein Thinclient.

Zum Beispiel umfassen der erfindungsgemäße Server, die erfindungsgemäße Sendeeinrichtung und/oder die erfindungsgemäße Empfangseinrichtung jeweils Mittel zum Ausführen eines der erfindungsgemäßen Computerprogramme wie einen Prozessor. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfassen der erfindungsgemäße Server, die erfindungsgemäße Sendeeinrichtung und/oder die erfindungsgemäße Empfangseinrichtung ferner jeweils Mittel zum Speichern von Informationen wie einen Programmspeicher und/oder einen Hauptspeicher.

Zum Beispiel umfassen der erfindungsgemäße Server, die erfindungsgemäße Sendeeinrichtung und/oder die erfindungsgemäße Empfangseinrichtung ferner jeweils Mittel zum Empfangen und/oder Senden von Informationen über ein Netzwerk wie eine Netzwerkschnittstelle. Zum Beispiel sind der erfindungsgemäße Server, die erfindungsgemäße Sendeeinrichtung und die erfindungsgemäße Empfangseinrichtung über ein oder mehrere Netzwerke miteinander verbunden und/oder verbindbar.

Zum Beispiel umfasst der erfindungsgemäße Server zumindest einen Prozessor und zumindest einen Speicher mit Programmanweisungen, wobei der zumindest eine Speicher und die Programmanweisungen konfiguriert sind, um, zusammen mit dem zumindest einen Prozessor, den erfindungsgemäßen Server zu veranlassen, die Schritte des ersten erfindungsgemäßen Verfahrens auszuführen. Zum Beispiel umfasst die erfindungsgemäße Sendeeinrichtung zumindest einen Prozessor und zumindest einen Speicher mit Programmanweisungen, wobei der zumindest eine Speicher und die Programmanweisungen konfiguriert sind, um, zusammen mit dem zumindest einen Prozessor, die erfindungsgemäße Sendeeinrichtung zu veranlassen, die Schritte des zweiten erfindungsgemäßen Verfahrens auszuführen. Zum Beispiel umfasst die erfindungsgemäße Empfangseinrichtung zumindest einen Prozessor und zumindest einen Speicher mit Programmanweisungen, wobei der zumindest eine Speicher und die Programmanweisungen konfiguriert sind, um, zusammen mit dem zumindest einen Prozessor, die erfindungsgemäße Empfangseinrichtung zu veranlassen, die Schritte des dritten erfindungsgemäßen Verfahrens auszuführen.

Ein erfindungsgemäßes System zum geschützten Übermitteln eines Datenobjekts umfasst einen erfindungsgemäßen Server, eine erfindungsgemäße Sendeeinrichtung und eine erfindungsgemäße Empfangseinrichtung.

Die erfindungsgemäßen Computerprogramme umfassen Programmanweisungen, die eine Datenverarbeitungsanlage zur Ausführung zumindest eines der erfindungsgemäßen Verfahren veranlassen, wenn eines der erfindungsgemäßen Computerprogramme auf einem Prozessor der Datenverarbeitungsanlage ausgeführt wird. Ein Computerprogramm ist beispielsweise über ein Netzwerk verteilbar. Ein Computerprogramm kann zumindest teilweise Software und/oder Firmware eines Prozessors sein.

Das erfindungsgemäße Computerprogramm, das Programmanweisungen umfasst, die eine Datenverarbeitungsanlage zur Ausführung des zweiten und/oder dritten erfindungsgemäßen Verfahrens veranlassen, wenn das erfindungsgemäße Computerprogramm auf einem Prozessor der Datenverarbeitungsanlage ausgeführt wird, ist zum Beispiel als Anwendungsprogramm (z.B. als App oder als Mobile-App) oder als Plugin-Modul für ein Nachrichten-Programm wie ein E-Mail-Programm ausgebildet. Zum Beispiel ist ein solches erfindungsgemäßes Computerprogramm ein proprietäres Computerprogramm, beispielsweise ein proprietäres Verschlüsselungs- und/oder Entschlüsselungsprogramm. Ein solches erfindungsgemäßes Computerprogramm kann zum Beispiel von dem Server zum Herunterladen über ein Netzwerk bereitgestellt werden. Jede Datenverarbeitungsanlage, die dem erfindungsgemäßen System zum geschützten Übermitteln eines Datenobjekts als Sendeeinrichtung und/oder als Empfangseinrichtung beitreten soll, kann ein solches erfindungsgemäßes Computerprogramm über das Netzwerk vom Server herunterladen.

Die erfindungsgemäßen Computerprogramme können jeweils in einem computerlesbaren Speichermedium gespeichert sein, welches eines oder mehrere erfindungsgemäße Computerprogramme enthält und z.B. als magnetisches, elektrisches, elektromagnetisches, optisches und/oder andersartiges Speichermedium ausgebildet ist. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nichtflüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Im Gegensatz zum Stand der Technik ist es gemäß Ausführungsbeispielen der vorliegenden Erfindung nicht erforderlich, dass der Adressat und/oder die Empfangseinrichtung den Schlüssel zum Entschlüsseln des verschlüsselten Datenobjekts vor dem Übertragen oder dem Bereitstellen zum Übertragen des verschlüsselten Datenobjekts durch die Sendeeinrichtung kennen. Lediglich der Server muss den Schlüssel zum Entschlüsseln des verschlüsselten Datenobjekts gemäß der vorliegenden Erfindung kennen, damit der Adressat und/oder die Empfangseinrichtung den Schlüssel zum Entschlüsseln des verschlüsselten Datenobjekts durch eine entsprechende Anfrage beim Server abfragen können.

Dies ist beispielsweise vorteilhaft, da von dem Adressaten und der Empfangseinrichtung keine besonderen Vorbereitungen getroffen werden müssen, um einen Empfang und eine Entschlüsselung des verschlüsselten Datenobjekts zu ermöglichen. Eine Benutzergruppe, die das erfindungsgemäße vierte Verfahren zum geschützten Übermitteln eines Datenobjekts anwendet, kann dadurch sehr einfach auf neue Benutzer ausgedehnt werden und kommt ohne eine zentrale Administration aus. Außerdem können eine Sendeeinrichtung und/oder eine Empfangseinrichtung dem erfindungsgemäßen System zum geschützten Übermitteln eines Datenobjekts dadurch sehr einfach beitreten. Außerdem kann das erfindungsgemäße System zum geschützten Übermitteln eines Datenobjekts sehr einfach in ein bestehendes System integriert werden, zum Beispiel lediglich durch Hinzufügung des erfindungsgemäßen Servers zu dem bestehenden System. Die vorliegende Erfindung nimmt somit Rücksicht auf die Gegebenheiten bestehender Systeme und Verfahren zum Übermitteln von elektronischen Nachrichten und lässt sich in diese sehr einfach integrieren.

Im Folgenden werden beispielhafte Ausgestaltungen der vorliegenden Erfindung beschrieben, welche auf weitere beispielhafte Merkmale der erfindungsgemäßen Verfahren, der erfindungsgemäßen Computerprogramme, der erfindungsgemäßen Sendeeinrichtung, der erfindungsgemäßen Empfangseinrichtung, des erfindungsgemäßen Servers und des erfindungsgemäßen Systems abstellen. Insbesondere sollen durch die Beschreibung eines zusätzlichen Verfahrenschritts eines der erfindungsgemäßen Verfahren auch als offenbart gelten Mittel zur Durchführung des Schritts der erfindungsgemäßen Sendeeinrichtung, der erfindungsgemäßen Empfangseinrichtung bzw. des erfindungsgemäßen Servers und eine entsprechende Programmanweisung des entsprechenden erfindungsgemäßen Computerprogramms, die eine Datenverarbeitungsanlage zur Ausführung des Verfahrensschritts veranlasst, wenn das Computerprogramm durch einen Prozessor der Datenverarbeitungsanlage ausgeführt wird. Das Gleiche soll auch für die Offenbarung eines Mittels zur Durchführung eines Verfahrensschritts oder einer Programmanweisung gelten, zum Beispiel soll die Offenbarung eines Mittels zur Durchführung eines Verfahrensschritts auch als Offenbarung des entsprechenden Verfahrensschritts und einer entsprechenden Programmanweisung verstanden werden.

In beispielhaften Ausgestaltungen der Erfindung wird der Schlüssel zum Entschlüsseln des verschlüsselten Datenobjekts oder ein Link zum Abrufen des Schlüssels zum Entschlüsseln des verschlüsselten Datenobjekts an eine elektronische Nachrichtenadresse des Adressaten gesendet.

Zum Beispiel stellt der Server den Schlüssel zum Entschlüsseln des verschlüsselten Datenobjekts zum Abrufen durch den Adressaten bereit und sendet eine elektronische Nachricht mit einem Link zum Abrufen des Schlüssels zum Entschlüsseln des verschlüsselten Datenobjekts an eine elektronische Nachrichtenadresse des Adressaten (z.B. die elektronische Nachrichtenadresse, an die auch das verschlüsselte Datenobjekt gesendet wird). Wenn der Adressat seine elektronischen Nachrichten mit der Empfangseinrichtung abruft, kann er den Link zum Abrufen des Schlüssels zum Entschlüsseln des verschlüsselten Datenobjekts verwenden. Dies ist beispielsweise vorteilhaft, um sicherzustellen, dass nur Personen, die Zugriff auf den Posteingang der elektronischen Nachrichtenadresse des Adressaten haben auch den Schlüssel zum Entschlüsseln des verschlüsselten Datenobjekts abrufen können.

Zum Beispiel wird der Schlüssel zum Entschlüsseln des verschlüsselten Datenobjekts oder der Link zum Abrufen des Schlüssels zum Entschlüsseln des verschlüsselten Datenobjekts an eine elektronische Nachrichtenadresse des Adressaten gesendet, die in den Identifizierungsinformationen enthalten ist (z.B. die elektronische Nachrichtenadresse des Adressaten, an die auch das verschlüsselte Datenobjekt gesendet wird). Dies ist beispielsweise vorteilhaft, weil der Adressat den Schlüssel zum Entschlüsseln des verschlüsselten Datenobjekts oder der Link zum Abrufen des Schlüssels zum Entschlüsseln des verschlüsselten Datenobjekts auf einem bekannten Übertragungsweg erhält.

Zum Beispiel wird der Schlüssel zum Entschlüsseln des verschlüsselten Datenobjekts oder der Link zum Abrufen des Schlüssels zum Entschlüsseln des verschlüsselten Datenobjekts an eine andere elektronische Nachrichtenadresse des Adressaten als das verschlüsselte Datenobjekt gesendet. Es ist jedoch auch denkbar, dass beide an dieselbe elektronische Nachrichtenadresse übertragen werden.

Zum Beispiel wird der Schlüssel zum Entschlüsseln des verschlüsselten Datenobjekts oder der Link zum Abrufen des Schlüssels zum Entschlüsseln des verschlüsselten Datenobjekts, durch den Server, von einer elektronischen Nachrichtenadresse des Absenders gesendet. Zum Beispiel wird der Schlüssel zum Entschlüsseln des verschlüsselten Datenobjekts oder der Link zum Abrufen des Schlüssels zum Entschlüsseln des verschlüsselten Datenobjekts, durch den Server, von derselben elektronischen Nachrichtenadresse wie das verschlüsselte Datenobjekt gesendet. Zum Beispiel kann der Server, wenn er beispielsweise keinen Zugriff auf den Postausgangs-Server der elektronischen Nachrichtenadresse des Absenders hat, ein sogenanntes offenes Relays (also einen Postausgangs-Server, bei dem man sich zum Senden einer elektronischen Nachrichtenadresse nicht authentifizieren muss) verwenden, um den Schlüssel zum Entschlüsseln des verschlüsselten Datenobjekts oder den Link zum Abrufen des Schlüssels zum Entschlüsseln des verschlüsselten Datenobjekts von einer elektronischen Nachrichtenadresse des Absenders an die elektronische Nachrichtenadresse des Adressaten senden. Man bezeichnet dies auch als sogenanntes "Mail-Spoofing". Dies ist beispielsweise vorteilhaft, weil der Adressat den Schlüssel zum Entschlüsseln des verschlüsselten Datenobjekts oder der Link zum Abrufen des Schlüssels zum Entschlüsseln des verschlüsselten Datenobjekts von einer elektronischen Nachrichtenadresse des Absenders (also einer ihm gegebenenfalls bekannten und vertrauenswürdigen elektronischen Nachrichtenadresse) erhält.

Alternativ kann der Schlüssel zum Entschlüsseln des verschlüsselten Datenobjekts oder der Link zum Abrufen des Schlüssels zum Entschlüsseln des verschlüsselten Datenobjekts, durch den Server, von einer elektronischen Nachrichtenadresse des Servers gesendet werden. Zum Beispiel wird der Schlüssel zum Entschlüsseln des verschlüsselten Datenobjekts oder der Link zum Abrufen des Schlüssels zum Entschlüsseln des verschlüsselten Datenobjekts, durch den Server, von einer eigens für den Versand solcher Schlüssel eingerichteten elektronischen Nachrichtenadresse gesendet.

Wie oben beschrieben, kann der Server den Schlüssel zum Entschlüsseln des verschlüsselten Datenobjekts einerseits beispielsweise als Reaktion auf das Empfangen einer Anfrage nach dem Schlüssel zum Entschlüsseln des verschlüsselten Datenpakets an die elektronische Nachrichtenadresse des Adressaten senden. Andererseits kann der Server den Schlüssel zum Entschlüsseln des verschlüsselten Datenobjekts beispielsweise unaufgefordert unmittelbar nach dem Erzeugen oder mit zeitlichem Abstand zum Erzeugen an die elektronische Nachrichtenadresse des Adressaten senden.

In beispielhaften Ausgestaltungen der Erfindung umfasst das erste erfindungsgemäße ferner das Empfangen einer Anfrage nach dem Schlüssel zum Entschlüsseln des verschlüsselten Datenobjekts an dem Server, wobei die Anfrage nach dem Schlüssel zum Entschlüsseln des verschlüsselten Datenobjekts Authentisierungsinformationen des Adressaten umfasst, und das Authentifizieren des Adressaten durch den Server; und das dritte erfindungsgemäße umfasst ferner das Senden einer Anfrage nach dem Schlüssel zum Entschlüsseln des verschlüsselten Datenobjekts mit Authentisierungsinformationen über einen Adressaten des verschlüsselten Datenobjekts von der Empfangseinrichtung an den Server.

Die Anfrage nach dem Schlüssel zum Entschlüsseln des verschlüsselten Datenobjekts des ersten erfindungsgemäßen Verfahrens entspricht beispielsweise der Anfrage nach dem Schlüssel zum Entschlüsseln des verschlüsselten Datenobjekts des dritten erfindungsgemäßen Verfahrens. Mit der Anfrage nach dem Schlüssel zum Entschlüsseln des Datenobjekts kann die Empfangseinrichtung den Schlüssel zum Entschlüsseln des Datenobjekts beim Server abfragen. Zum Beispiel kann der Adressat die Empfangseinrichtung veranlassen, den Schlüssel zum Entschlüsseln des Datenobjekts beim Server abfragen.

Die Anfrage nach dem Schlüssel zum Entschlüsseln des Datenobjekts umfasst Authentisierungsinformationen des Adressaten. Die Authentisierungsinformationen enthalten zum Beispiel eine elektronische Nachrichtenadresse (z.B. eine E-Mail-Adresse oder eine DE-Mail-Adresse), eine Identifizierungsnummer (z.B. eine Kundenummer oder eine Registrierungsnummer), einen Benutzernamen, einen Namen, eine Anschrift, eine Telefonnummer, ein Authentisierungsmerkmal und/oder ein Passwort (z.B. ein Einmalpasswort).

Zum Beispiel umfassen die Authentisierungsinformationen zumindest eine Information wie einen Benutzernamen und ein Passwort, die auch in den Registrierungsinformationen des beim Server als Benutzer registrierten Adressaten enthalten ist. Der Server kann den Adressaten dann durch einen Abgleich der Authentisierungsinformationen mit den Registrierungsinformationen authentifizieren.

Zum Beispiel umfassen die Authentisierungsinformationen zumindest eine Information wie den Namen und die Anschrift des Adressaten, die auch in den Identifizierungsinformationen enthalten ist. Der Server kann den Adressaten dann durch einen Abgleich der Authentisierungsinformationen mit den Identifizierungsinformationen authentifizieren.

Die Authentisierungsinformationen können zumindest teilweise an der Empfangsvorrichtung von dem Adressaten eingegeben und/oder zumindest teilweise durch die Empfangsvorrichtung eingelesen werden. Zum Beispiel gibt der Adressat an der Empfangsvorrichtung einen Benutzernamen und ein Passwort als Authentisierungsinformationen ein. Zum Beispiel liest die Empfangsvorrichtung ein Authentifizierungsmerkmal wie Informationen von einer Smartcard und/oder ein biometrisches Merkmal als Authentisierungsinformationen ein. Eine Smartcard ist zum Beispiel der elektronische Personalausweis des Adressaten oder ein Bankkarte. Ein biometrisches Merkmal ist zum Beispiel der Fingerabdruck des Adressaten. Dies ist beispielsweise vorteilhaft, um sowohl eine Ein-Faktor-Authentifizierung als auch eine Zwei-Faktor-Authentifizierung zu ermöglichen.

Zum Beispiel wird der Schlüssel zum Entschlüsseln des verschlüsselten Datenobjekts durch den Server an die Empfangseinrichtung nur dann gesendet oder zum Abrufen bereitgestellt, wenn der Adressat durch den Server authentifiziert ist.

In beispielhaften Ausgestaltungen der Erfindung umfasst das erste erfindungsgemäße ferner das Erzeugen des Schlüssels zum Entschlüsseln des verschlüsselten Datenobjekts durch den Server.

In beispielhaften Ausgestaltungen der Erfindung umfasst das erste erfindungsgemäße Verfahren ferner das Erzeugen eines Schlüssels zum Verschlüsseln des Datenobjekts durch den Server, und das Senden des Schlüssels zum Verschlüsseln des Datenobjekts von dem Server an die Sendeeinrichtung oder das Bereitstellen, durch den Server, des Schlüssels zum Verschlüsseln des Datenobjekts zum Abrufen durch die Sendeeinrichtung; und das zweite erfindungsgemäße Verfahren umfasst ferner das Empfangen des Schlüssels zum Verschlüsseln des Datenobjekts von dem Server an der Sendeeinrichtung.

Zum Beispiel erzeugt der Server sowohl den Schlüssel zum Verschlüsseln des Datenobjekts als auch den Schlüssel zum Entschlüsseln des Datenobjekts (z.B. als asymmetrisches Schlüsselpaar). Dies ist unter anderem vorteilhaft, da das Erzeugen der Schlüssel unter alleiniger Kontrolle des Servers stattfindet. Zum Beispiel kann dadurch sichergestellt werden, dass die Schlüssel bestimmte Mindesterfordernisse wie Schlüssellänge und Anzahl von verwendeten Zeichen und Symbolen erfüllen.

Zum Beispiel empfängt der Server eine Anfrage nach dem Schlüssel zum Verschlüsseln des Datenobjekts von der Sendeeinrichtung. Zum Beispiel erzeugt der Server den Schlüssel zum Entschlüsseln des verschlüsselten Datenobjekts und/oder den Schlüssel zum Verschlüsseln des Datenobjekts, sobald er eine solche Anfrage von der Sendeeinrichtung empfängt. Demnach veranlasst die Sendeeinrichtung (bzw. der Absender) das Erzeugen des Schlüssels zum Verschlüsseln des Datenobjekts und/oder des Schlüssels zum Entschlüsseln des verschlüsselten Datenobjekts.

Zum Beispiel wird der Schlüssel zum Verschlüsseln des verschlüsselten Datenobjekts von dem Server verschlüsselt an die Sendeeinrichtung gesendet. Zum Beispiel wird der Schlüssel zum Entschlüsseln des verschlüsselten Datenobjekts in einer HTTPS-Verbindung über ein Netzwerk von dem Server an die Sendeeinrichtung gesendet.

Zum Beispiel sind der Schlüssel zum Verschlüsseln des Datenobjekts und der Schlüssel zum Entschlüsseln des verschlüsselten Datenobjekts die identischen Schlüssel eines symmetrischen Verschlüsselungsverfahrens. Ein Beispiel für ein symmetrisches Verschlüsselungsverfahren ist das AES-Verschlüsselungsverfahren. Ein symmetrisches Verschlüsselungsverfahren ist unter anderem vorteilhaft, wenn eine große Datenmenge verschlüsselt werden sollen, da es schneller ist.

Zum Beispiel ist der Schlüssel zum Verschlüsseln des Datenobjekts ein öffentlicher Schlüssel eines asymmetrischen Verschlüsselungsverfahrens und der Schlüssel zum Entschlüsseln des verschlüsselten Datenobjekts ist der korrespondierende private Schlüssel des asymmetrischen Verschlüsselungsverfahrens. Ein Beispiel für ein asymmetrisches Verschlüsselungsverfahren ist das RSA-Verschlüsselungsverfahren und/oder das Elliptische-Kurven-Kryptographie-Verschlüsselungsverfahren. Ein asymmetrisches Verschlüsselungsverfahren ist unter anderem vorteilhaft, wenn kleine Datenmengen verschlüsselt werden sollen, da es schwerer anzugreifen (also zu "knacken") ist als ein symmetrisches Verschlüsselungsverfahren.

In beispielhaften Ausgestaltungen der Erfindung umfasst das zweite erfindungsgemä-ße Verfahren ferner das Erzeugen des Schlüssels zum Entschlüsseln und/oder Verschlüsseln des Datenobjekts durch die Sendeeinrichtung, wobei der Schlüssel zum Entschlüsseln und/oder Verschlüsseln des Datenobjekts zusammen mit den Identifizierungsinformationen an den Server gesendet wird. Zum Beispiel erzeugt die Sendeeinrichtung sowohl den Schlüssels zum Verschlüsseln des Datenobjekts als auch den Schlüssel zum Entschlüsseln des verschlüsselten Datenobjekts. Der Schlüssel zum Verschlüsseln des Datenobjekts kann dann vom Server zertifiziert werden.

In beispielhaften Ausgestaltungen der Erfindung umfasst das erste erfindungsgemäße Verfahren ferner das Erzeugen eines Zertifikats für den Schlüssel zum Entschlüsseln des verschlüsselten Datenobjekts durch den Server, und das Senden an den Adressaten oder Bereitstellen zum Abrufen durch den Adressaten des Zertifikats für den Schlüssel zum Entschlüsseln des verschlüsselten Datenobjekts. Zum Beispiel wird das Zertifikat für den Schlüssel zum Entschlüsseln des verschlüsselten Datenobjekts zusammen mit dem Schlüssel zum Entschlüsseln des verschlüsselten Datenobjekts gesendet oder zum Abrufen bereitgestellt.

Zum Beispiel ist der Server ein Server einer anerkannten Zertifizierungsstelle (z.B. einer vertrauenswürdigen Zertifizierungsinstanz). Das Zertifikat kann die (vertrauenswürdige) Herkunft und/oder Echtheit des Schlüssels zum Entschlüsseln des verschlüsselten Datenobjekts bestätigen. Zum Beispiel ist das Zertifikat für den Schlüssel zum Entschlüsseln des verschlüsselten Datenobjekts ein X.509-Zertifikat gemäß dem X.509-Standard. Ein X.509-Zertifikat ist ein Public-Key-Zertifikat, welches beispielsweise die Identität des Inhabers und weitere Eigenschaften eines öffentlichen Schlüssels bestätigt. Eine ausführliche Beschreibung einer möglichen technischen Realisierung einer Public-Key-lnfrastruktur kann der Informationsbroschüre "Grundlagen der elektronischen Signatur", Bundesamt für Sicherheit in der Informationstechnik 2006 und insbesondere Kapitel 3.2 dieser Broschüre entnommen werden. Dies ist unter anderem vorteilhaft, um zu verhindern, dass der Schlüssel zum Entschlüsseln des verschlüsselten Datenobjekts auf dem Übertragungsweg von dem Server zu der Empfangseinrichtung von einem Angreifer ausgetauscht wird.

Es sind jedoch auch Ausgestaltungen denkbar, in denen der Server kein Zertifikat für den Schlüssel zum Entschlüsseln des verschlüsselten Datenobjekts erzeugt. Zum Beispiel wird der Schlüssel zum Entschlüsseln des verschlüsselten Datenobjekts durch den Server gesendet oder durch den Server zum Abrufen bereitgestellt, ohne dass der Server ein Zertifikat für den Schlüssel zum Entschlüsseln des verschlüsselten Datenobjekts erzeugt.

In beispielhaften Ausgestaltungen der Erfindung umfasst das erste erfindungsgemäße Verfahren ferner das Erzeugen eines Zertifikats für einen Schlüssel zum Verschlüsseln des Datenobjekts durch den Server, und das Senden des Zertifikats für den Schlüssel zum Verschlüsseln des Datenobjekts von dem Server an die Sendeeinrichtung; und das zweite erfindungsgemäße Verfahren umfasst das Empfangen eines Zertifikats für den Schlüssel zum Verschlüsseln des Datenobjekts von dem Server an der Sendeeinrichtung.

Zum Beispiel ist der Server ein Server einer anerkannten Zertifizierungsstelle (z.B. einer vertrauenswürdigen Zertifizierungsinstanz). Das Zertifikat kann die (vertrauenswürdige) Herkunft und/oder Echtheit des Schlüssels zum Verschlüsseln des verschlüsselten Datenobjekts bestätigen. Zum Beispiel ist das Zertifikat für den Schlüssel zum Verschlüsseln des verschlüsselten Datenobjekts ein X.509-Zertifikat gemäß dem X.509-Standard. Dies ist unter anderem vorteilhaft, um zu verhindern, dass der Schlüssel zum Verschlüsseln des verschlüsselten Datenobjekts auf dem Übertragungsweg von dem Server zu der Sendeeinrichtung von einem Angreifer ausgetauscht wird.

Zum Beispiel wird das Zertifikat für den Schlüssel zum Verschlüsseln des verschlüsselten Datenobjekts zusammen mit dem Schlüssel zum Verschlüsseln des verschlüsselten Datenobjekts durch den Server an die Sendeeinrichtung gesendet. Die Sendeeinrichtung kann das Zertifikat für den Schlüssel zum Verschlüsseln des verschlüsselten Datenobjekts zusammen mit dem verschlüsselten Datenobjekt an den Adressaten senden oder zum Abrufen durch den Adressaten bereitstellen.

Zum Beispiel enthält die Anfrage nach dem Schlüssel zum Entschlüsseln des verschlüsselten Datenobjekts das Zertifikat für den Schlüssel zum Verschlüsseln des Datenobjekts. Es ist jedoch auch denkbar, dass statt dem Zertifikat ein anders eindeutiges Merkmal wie eine Schlüsselnummer verwendet wird. Dies ist beispielweise vorteilhaft, um dem Server das Auffinden des Schlüssels zum Entschlüsseln des Datenobjekts zu erleichtern.

Zum Beispiel ordnet der Server dem Zertifikat für den Schlüssel zum Verschlüsseln des Datenobjekts (oder dem anderen eindeutigen Merkmal) den Schlüssel zum Entschlüsseln des verschlüsselten Datenobjekts (logisch) zu, so dass er den Schlüssel zum Entschlüsseln des verschlüsselten Datenobjekts mit Hilfe des Zertifikats für den Schlüssel zum Verschlüsseln des Datenobjekts (oder dem anderen eindeutigen Merkmal) finden kann. Zum Beispiel kann diese Zuordnung in einem Eintrag einer Datenbank wie einer Schlüsseldatenbank, die sich in einem Speicher des Servers befindet, gespeichert werden.

Es sind jedoch auch Ausgestaltungen denkbar, in denen der Server kein Zertifikat für den Schlüssel zum Verschlüsseln des Datenobjekts erzeugt. Zum Beispiel wird der Schlüssel zum Verschlüsseln des Datenobjekts durch den Server gesendet oder durch den Server zum Abrufen bereitgestellt, ohne dass der Server ein Zertifikat für den Schlüssel zum Verschlüsseln des Datenobjekts erzeugt.

In beispielhaften Ausgestaltungen der Erfindung umfasst das zweite erfindungsgemä-ße Verfahren ferner das Erzeugen einer digitalen Signatur für das Datenobjekt durch die Sendeeinrichtung.

Zum Beispiel wird die digitale Signatur zusammen mit dem verschlüsselten Datenobjekt durch die Sendeeinrichtung an den Adressaten gesendet oder zum Abrufen durch den Adressaten bereitgestellt. Der Adressat bzw. die Empfangseinrichtung des Adressaten kann dann anhand der digitalen Signatur die Echtheit des Datenobjekts (z.B. des entschlüsselten Datenobjekts) überprüfen.

Zum Beispiel enthält die digitale Signatur einen verschlüsselten Hash-Wert des Datenobjekts, der mit dem Schlüssel zum Entschlüsseln des verschlüsselten Datenobjekts entschlüsselbar ist. Der Hash-Wert des Datenobjekts kann über eine Hash-Funktion wie SHA-1 berechnet werden. Die Sendeeinrichtung kann die digitale Signatur jedoch auch auf andere Art und Weise erzeugen. Zum Beispiel kann die digitale Signatur gemäß dem PKCS#7-Standard erzeugt werden. Eine ausführliche Beschreibung einer möglichen technischen Realisierung des Erzeugens und Prüfens einer digitalen Signatur kann der Informationsbroschüre "Grundlagen der elektronischen Signatur", Bundesamt für Sicherheit in der Informationstechnik 2006 und insbesondere Kapitel 4 dieser Broschüre entnommen werden.

In beispielhaften Ausgestaltungen der Erfindung umfasst das dritte erfindungsgemäße Verfahren ferner das Entfernen des Schlüssels zum Entschlüsseln des verschlüsselten Datenobjekts von der Empfangseinrichtung. Zum Beispiel löscht die Empfangseinrichtung den Schlüssel zum Entschlüsseln des verschlüsselten Datenobjekts nach dem Entschlüsseln des verschlüsselten Datenobjekts, beispielsweise unmittelbar nach dem Entschlüsseln und/oder ohne Benutzerinteraktion. Zum Beispiel muss der Schlüssel zum Entschlüsseln des verschlüsselten Datenobjekts vor jedem Entschlüsseln des verschlüsselten Datenobjekts erneut beim Server abgefragt werden.

Zum Beispiel wird der Schlüssel zum Entschlüsseln des verschlüsselten Datenobjekts in einem temporären Verzeichnis in einem Speicher der Empfangseinrichtung gespeichert. Zum Beispiel dürfen nur bestimmte Computerprogramme (z.B. das erfindungsgemäße Computerprogramm, das Programmanweisungen umfasst, die eine Datenverarbeitungsanlage zur Ausführung des zweiten und/oder dritten erfindungsgemäßen Verfahrens veranlassen, wenn das erfindungsgemäße Computerprogramm auf einem Prozessor der Datenverarbeitungsanlage ausgeführt wird) auf das temporäre Verzeichnis zugreifen. Zum Beispiel befindet sich das temporäre Verzeichnis in einem virtuellen Datenträger in einem Hauptspeicher der Empfangseinrichtung (z.B. in einer sogenannten RAM-Disk oder einem sogenannten RAM-Drive). Der Hauptspeicher der Empfangseinrichtung kann ein flüchtiger Speicher sein.

Dies ist beispielsweise vorteilhaft, um zu verhindern, dass der Schlüssel zum Entschlüsseln des verschlüsselten Datenobjekts dauerhaft auf der Empfangseinrichtung gespeichert ist.

In beispielhaften Ausgestaltungen der Erfindung umfasst das dritte erfindungsgemäße Verfahren ferner das Entfernen des entschlüsselten Datenobjekts von der Empfangseinrichtung. Zum Beispiel wird das verschlüsselte Datenobjekt, wie oben beschrieben, durch die Empfangseinrichtung nur zur Anzeige und/oder Bearbeitung durch den Adressaten entschlüsselt. Zum Beispiel wird es anschließend (beispielsweise unmittelbar nach dem Anzeigen und/oder Bearbeiten) durch die Empfangseinrichtung wieder verschlüsselt und/oder das entschlüsselte Datenobjekt wird anschließend durch die Empfangseinrichtung gelöscht.

Zum Beispiel wird das entschlüsselte Datenobjekt in einem temporären Verzeichnis auf der Empfangseinrichtung gespeichert. Zum Beispiel dürfen nur bestimmte Computerprogramm (z.B. das erfindungsgemäße Computerprogramm, das Programmanweisungen umfasst, die eine Datenverarbeitungsanlage zur Ausführung des zweiten und/oder dritten erfindungsgemäßen Verfahrens veranlassen, wenn das erfindungsgemäße Computerprogramm auf einem Prozessor der Datenverarbeitungsanlage ausgeführt wird) auf das temporäre Verzeichnis zugreifen. Zum Beispiel befindet sich das temporäre Verzeichnis in einem virtuellen Datenträger in einem Hauptspeicher der Empfangseinrichtung (z.B. in einer sogenannten RAM-Disk oder einem sogenannten RAM-Drive). Der Hauptspeicher der Empfangseinrichtung kann ein flüchtiger Speicher sein.

Dies ist beispielsweise vorteilhaft, um sicherzustellen, dass das Datenobjekt dauerhaft nur verschlüsselt auf der Empfangseinrichtung gespeichert ist. In Verbindung mit dem Entfernendes Schlüssels zum Entschlüsseln des verschlüsselten Datenobjekts von der Empfangseinrichtung, kann dadurch ferner erreicht werden, dass der Schlüssel zum Entschlüsseln des verschlüsselten Datenobjekts jedes Mal erneut beim Server abgefragt werden muss, wenn der Adressat das Datenobjekt (und die darin enthaltenen Informationen) anzeigen und/oder bearbeiten möchte.

In beispielhaften Ausgestaltungen der Erfindung ist das Datenobjekt ein Datenobjekt einer Vielzahl von Datenobjekten.

Zum Beispiel ist das verschlüsselte Datenobjekt ein verschlüsseltes Datenobjekt einer Vielzahl von verschlüsselten Datenobjekten, wobei jedes der verschlüsselten Datenobjekten von einer Sendeeinrichtung einer Vielzahl von Sendeeinrichtungen an einen Adressaten einer Vielzahl von Adressaten gesendet oder zum Abrufen bereitgestellt wird. Zum Beispiel sendet jede der Sendeeinrichtungen der Vielzahl von Sendeeinrichtungen zumindest eines der verschlüsselten Datenobjekte der Vielzahl von verschlüsselten Datenobjekten oder stellt es zum Abruf bereit. Zum Beispiel veranlasst jeder der Adressaten der Vielzahl von Adressaten, dass zumindest eines der verschlüsselten Datenobjekte der Vielzahl von verschlüsselten Datenobjekten an einer Empfangseinrichtung einer Vielzahl von Empfangseinrichtungen erhalten wird.

Zum Beispiel führt jede der Sendeeinrichtungen der Vielzahl von Sendeeinrichtungen die Schritte des zweiten erfindungsgemäßen Verfahrens für zumindest eines der verschlüsselten Datenobjekte der Vielzahl von verschlüsselten Datenobjekten aus und/oder ist eingerichtet, diese Schritte auszuführen, und zum Beispiel führt jede der Empfangseinrichtungen der Vielzahl von Empfangseinrichtungen die Schritte des dritten erfindungsgemäßen Verfahrens für zumindest eines der verschlüsselten Datenobjekte der Vielzahl von verschlüsselten Datenobjekten aus und/oder ist eingerichtet, diese Schritte auszuführen. Zum Beispiel führt der Server (also zum Beispiel ein einziger Server) die Schritte des ersten erfindungsgemäßen Verfahrens für jedes verschlüsselte Datenobjekte der Vielzahl von verschlüsselten Datenobjekten aus und/oder ist eingerichtet, diese Schritte auszuführen.

Zum Beispiel umfasst der erfindungsgemäße Server ein oder mehrere Mittel zum Ausführen der Schritte des ersten erfindungsgemäßen Verfahrens für eine Vielzahl von verschlüsselten Datenobjekten. Zum Beispiel umfasst die erfindungsgemäße Sendeeinrichtung ein oder mehrere Mittel zum Ausführen der Schritte des zweiten erfindungsgemäßen Verfahrens für eine Vielzahl von verschlüsselten Datenobjekten. Zum Beispiel umfasst die erfindungsgemäße Empfangseinrichtung ein oder mehrere Mittel zum Ausführen der Schritte des dritten erfindungsgemäßen Verfahrens für eine Vielzahl von verschlüsselten Datenobjekten.

In beispielhaften Ausgestaltungen der Erfindung ist der Schlüssel zum Entschlüsseln des verschlüsselten Datenobjekts ein Einmalschlüssel. Ein Einmalschlüssel kann zum Beispiel nur einmal zum Entschlüsseln des verschlüsselten Datenobjekts verwendet werden. Zum Beispiel sendet der Server den Schlüssel zum Entschlüsseln des verschlüsselten Datenobjekts nur einmal oder stellt ihn nur einmal zum Abrufen bereit. Zum Beispiel löscht der Server den Schlüssel zum Entschlüsseln des verschlüsselten Datenobjekts anschließend. Dies ist beispielsweise vorteilhaft, wenn der Schlüssel zum Entschlüsseln des verschlüsselten Datenobjekts vor jedem Entschlüsseln des verschlüsselten Datenobjekts erneut beim Server abgefragt werden muss, um sicherzustellen, dass das verschlüsselte Datenobjekt nur einmal entschlüsselt werden kann.

In beispielhaften Ausgestaltungen der Erfindung ist nur das verschlüsselte Datenobjekt mit dem Schlüssel zum Entschlüsseln des verschlüsselten Datenobjekts entschlüsselbar. Zum Beispiel ist kein anders verschlüsseltes Datenobjekt mit dem Schlüssel zum Entschlüsseln des verschlüsselten Datenobjekts entschlüsselbar. Dies ist unter anderem vorteilhaft, um zu verhindern, dass ein Angreifer, der den Schlüssel zum Entschlüsseln des verschlüsselten Datenobjekts erbeutet hat, auch andere verschlüsselte Datenobjekte entschlüsseln kann. Dadurch wird insbesondere der Schutz der verschlüsselten Datenobjekte erhöht, die von einem Absender zu einem Adressaten übermittelt werden sollen. Denn der Angreifer muss für jedes der verschlüsselten Datenobjekte den Schlüssel zum Entschlüsseln des jeweiligen verschlüsselten Datenobjekts erbeuten.

In beispielhaften Ausgestaltungen der Erfindung hat der Schlüssel zum Entschlüsseln des verschlüsselten Datenobjekts eine vorgegebene Gültigkeitsdauer, wobei der Schlüssel von dem Server nur dann an den Adressaten gesendet oder zum Abrufen durch den Adressaten bereitgestellt wird, wenn der Server eine Anfrage nach dem Schlüssel innerhalb der vorgegebenen Gültigkeitsdauer empfängt.

Zum Beispiel löscht der Server den Schlüssel zum Entschlüsseln des verschlüsselten Datenobjekts unmittelbar nach Ablauf der vorgegebenen Gültigkeitsdauer. Nach Ablauf der vorgegebenen Gültigkeitsdauer kann der Schlüssel zum Entschlüsseln des verschlüsselten Datenobjekts dann nicht mehr beim Server abgefragt werden, so dass ein Entschlüsseln des verschlüsselten Datenobjekts und damit ein Zugriff auf die darin enthaltenen Informationen nicht mehr möglich ist. Dies ist beispielsweise vorteilhaft, wenn der Schlüssel zum Entschlüsseln des verschlüsselten Datenobjekts vor jedem Entschlüsseln des verschlüsselten Datenobjekts erneut beim Server abgefragt werden muss, um eine "Lebensdauer" für die in dem verschlüsselten Datenobjekt enthaltenen Informationen vorgegeben zu können.

In beispielhaften Ausgestaltungen der Erfindung umfasst das Senden des verschlüsselten Datenobjekts das Senden des verschlüsselten Datenobjekts in einer elektronischen Nachricht für den Adressaten des Datenobjekts und die Empfangseinrichtung ist eine beliebige Datenverarbeitungsanlage, mit der der Adressat die elektronische Nachricht abruft und/oder auf die elektronische Nachricht zugreift.

Zum Beispiel ist das verschlüsselte Datenobjekt ein Teil der elektronischen Nachricht wie ein Anhang. Beispiele für eine elektronische Nachricht sind, wie oben beschrieben, eine E-Mail, eine DE-Mail, eine Kurzmitteilung wie SMS und MMS und/oder eine über einen sogenannten Messengerdienst wie WhatsApp und Skype versendete Nachricht. Zum Beispiel ist die elektronische Nachricht an eine entsprechende elektronische Nachrichtenadresse des Adressaten gerichtet.

Dies ist unter anderem vorteilhaft, um zum Übermitteln des verschlüsselten Datenobjekts auf ein bestehendes System oder Verfahren zum Übermitteln von elektronischen Nachrichten zurückgreifen zu können. Beispielsweise kann der Adressat das verschlüsselte Datenobjekt über seine normale E-Mail-Adresse oder seine normale DE-Mail-Adresse empfangen, ohne dass er vorher besondere Vorbereitung für den Empfang getroffen haben muss. Die vorliegende Erfindung nimmt, wie oben beschrieben, somit Rücksicht auf die Gegebenheiten bestehender Systeme und Verfahren zum Übermitteln von elektronischen Nachrichten und lässt sich in diese sehr einfach integrieren.

Zum Beispiel ist die Empfangseinrichtung eine Datenverarbeitungsanlage, die eingerichtet ist, um die elektronische Nachricht zu empfangen und/oder abzurufen, und die der Adressat zum Empfangen und/oder Abrufen der elektronischen Nachricht benutzt.

Zum Beispiel kann die elektronische Nachricht außerdem Hinweise und/oder einen Link zur Registrierung und/oder zum Herunterladen des erfindungsgemäßen Computerprogramms enthalten, das Programmanweisungen umfasst, die eine Datenverarbeitungsanlage zur Ausführung des dritten erfindungsgemäßen Verfahrens veranlassen, wenn das erfindungsgemäße Computerprogramm auf einem Prozessor der Datenverarbeitungsanlage ausgeführt wird. Wie oben beschrieben, kann dieses Computerprogramm als Anwendungsprogramm (z.B. als App oder als Mobile-App) oder als Plugin-Modul für ein Nachrichten-Programm wie ein E-Mail-Programm ausgebildet sein.

In beispielhaften Ausgestaltungen der Erfindung umfasst das Datenobjekt eine oder mehrere Dateien, wobei das Dateiformat der einen oder mehreren Dateien ein transportables Dokumentenformat (z.B. ein PDF-Format), ein Nachrichtenformat (z.B. ein EML-Format), ein Textbearbeitungsdokumentenformat (z.B. ein TXT-, DOC- oder XDOC-Format), ein Tabellenkalkulationsdokumentenformat (z.B. ein XLS- oder XLSX-Format), ein Datenkompressionsformat (z.B. ein ZIP- oder GZIP-Format) und/oder ein Mediendateiformat (z.B. ein AVI-, MOV-, MPEG- oder MP3-Format) ist.

In beispielhaften Ausgestaltungen der Erfindung ist das verschlüsselte Datenobjekt als Datei ausgebildet, wobei das Dateiformat des verschlüsselten Datenobjekts ein proprietäres Dateiformat ist. Zum Beispiel ist dieses proprietäre Dateiformat mit keinem bekannten Verschlüsselungs-Dateiformat kompatibel, so dass es von keinem bekannten Ver- und Entschlüsselungsprogramm geöffnet werden kann. Es kann jedoch von einem proprietären Computerprogramm wie einem erfindungsgemäßen Computerprogramm geöffnet werden. Dies ist beispielsweise vorteilhaft, um sicherzustellen, dass der Adressat das erfindungsgemäße Computerprogramm (z.B. das proprietäre-Verschlüsselungs- und/oder Entschlüsselungsprogramm) auf der Empfangseinrichtung zum Anzeigen und/oder Bearbeiten der in dem verschlüsselten Datenobjekt enthaltenen Informationen benutzt. Durch das erfindungsgemäße Computerprogramm auf der Empfangseinrichtung kann sichergestellt werden, dass das verschlüsselte Datenobjekt zum Beispiel nur zum Anzeigen und/oder Bearbeiten entschlüsselt wird und/oder dass der Schlüssel zum Entschlüsseln des verschlüsselten Datenobjekts nach dem Entschlüsseln des verschlüsselten Datenobjekts von der Empfangseinrichtung zum Beispiel entfernt wird.

Das verschlüsselte Datenobjekt kann zum Beispiel eine entsprechende Dateinamenerweiterung und/oder einen entsprechenden MIME-Type aufweisen, um auf das proprietäre Dateiformat hinzuweisen. Das erfindungsgemäße Computerprogramm (z.B. das proprietäre Verschlüsselungs- und/oder Entschlüsselungsprogramm) kann zum Öffnen von Dateien mit einer solchen Dateinamenerweiterung und/oder einem solchen MIME-Type auf der Empfangseinrichtung registriert sein.

Ferner können in dem proprietären Dateiformat Vorgaben für zulässige und/oder unzulässige Operation mit dem entschlüsselten Datenobjekt einstellbar sein. Zum Beispiel kann der Absender an der Sendeeinrichtung entsprechende Einstellungen vorgegeben.

Es sind beispielsweise auch Ausgestaltungen denkbar, in denen das verschlüsselte Datenobjekt als Datei ausgebildet ist, wobei das Dateiformat des verschlüsselten Datenobjekts ein Standard-Dateiformat ist, zum Beispiel ein Dateiformat gemäß dem S/MIME- Standard, dem PGP-Standard und/oder dem PKCS#7-Standard. Dies ist zum Beispiel vorteilhaft, um eine Kompatibilität des verschlüsselten Datenobjekts mit bekannten Ver- und/oder Entschlüsselungsprogrammen zu erreichen.

In beispielhaften Ausgestaltungen der Erfindung ist der Schlüssel zum Entschlüsseln des verschlüsselten Datenobjekts als Datei ausgebildet und weist eine entsprechende Dateinamenerweiterung und/oder einen entsprechenden MIME-Type auf, um als Schlüssel zum Entschlüsseln des verschlüsselten Datenobjekts erkannt zu werden (z.B. um als Schlüssel der erfindungsgemäßen Verfahren erkannt zu werden). Das erfindungsgemäße Computerprogramm (z.B. das proprietäre Verschlüsselungs- und/oder Entschlüsselungsprogramm) kann zum Öffnen von Dateien mit einer solchen Dateinamenerweiterung und/oder einem solchen MIME-Type auf der Sende- und/oder Empfangseinrichtung registriert sein.

In einer alternativen Ausführungsform der Erfindung umfasst ein alternatives erstes erfindungsgemäßes Verfahren das Empfangen einer Anfrage nach einem Schlüssel zum Entschlüsseln des verschlüsselten Datenobjekts von einer Sendeeinrichtung an einem Server, das Erzeugen des Schlüssels zum Entschlüsseln eines Datenobjekts durch den Server, und das Senden des Schlüssels zum Entschlüsseln des verschlüsselten Datenobjekts an die Sendeeinrichtung durch den Server oder das Bereitstellen, durch den Server, des Schlüssels zum Entschlüsseln des verschlüsselten Datenobjekts zum Abrufen durch die Sendeeinrichtung.

In der alternativen Ausführungsform der Erfindung umfasst ein alternatives zweites erfindungsgemäßes Verfahren das Senden einer Anfrage nach einem Schlüssel zum Entschlüsseln eines verschlüsselten Datenobjekts von einer Sendeeinrichtung an einem Server, das Empfangen des Schlüssels zum Entschlüsseln des verschlüsselten Datenobjekts von dem Server an der Sendeeinrichtung, das Verschlüsseln des Datenobjekts durch die Sendeeinrichtung derart, dass es mit dem Schlüssel zum Entschlüsseln des verschlüsselten Datenobjekts entschlüsselbar ist, und das Senden des verschlüsselten Datenobjekts und/oder des Schlüssels zum Entschlüsseln des verschlüsselten Datenobjekts von der Sendeeinrichtung an einen Adressaten oder das Bereitstellen, durch die Sendeeinrichtung, des verschlüsselten Datenobjekts und/oder des Schlüssels zum Entschlüsseln des verschlüsselten Datenobjekts zum Abrufen durch den Adressaten.

In der alternativen Ausführungsform der Erfindung umfasst ein alternatives drittes erfindungsgemäßes Verfahren das das Erhalten eines verschlüsselten Datenobjekts an einer Empfangseinrichtung, das Empfangen eines Schlüssels zum Entschlüsseln des verschlüsselten Datenobjekts von einer Sendeeinrichtung an der Empfangseinrichtung, und das Entschlüsseln des verschlüsselten Datenobjekts durch die Empfangseinrichtung.

In der alternativen Ausführungsform der Erfindung umfasst ein alternatives viertes erfindungsgemäßes Verfahren die Schritte des alternativen ersten erfindungsgemäßen Verfahrens, die zum Beispiel auf einem Server ablaufen, die Schritte des alternativen zweiten erfindungsgemäßen Verfahrens, die zum Beispiel auf einer Sendeeinrichtung ablaufen, und die Schritte des alternativen dritten erfindungsgemäßen Verfahrens, die zum Beispiel auf einer Empfangseinrichtung ablaufen. Die Schritte des alternativen ersten, des alternativen zweiten und des alternativen dritten erfindungsgemäßen Verfahrens sollen somit vorzugsweise als korrespondierende Schritte des alternativen vierten erfindungsgemäßen Verfahrens zum geschützten Übermitteln eines verschlüsselten Datenobjekts verstanden werden, die beispielsweise in einem System, umfassend den Server, die Sendeeinrichtung und die Empfangseinrichtung, ablaufen können.

In der alternativen Ausführungsform der Erfindung umfasst ein alternativer erfindungsgemäßer Server ein oder mehrere Mittel zur Ausführung der Schritte des alternativen ersten erfindungsgemäßen Verfahrens. In der alternativen Ausführungsform der Erfindung umfasst eine alternative erfindungsgemäße Sendeeinrichtung ein oder mehrere Mittel zur Ausführung der Schritte des alternativen zweiten erfindungsgemäßen Verfahrens. In der alternativen Ausführungsform der Erfindung umfasst eine alternative erfindungsgemäße Empfangseinrichtung ein oder mehrere Mittel zur Ausführung der Schritte des alternativen dritten erfindungsgemäßen Verfahrens.

In der alternativen Ausführungsform der Erfindung umfassen die alternativen erfindungsgemäßen Computerprogramme Programmanweisungen, die eine Datenverarbeitungsanlage zur Ausführung zumindest eines der alternativen erfindungsgemäßen Verfahren veranlassen, wenn eines der alternativen erfindungsgemäßen Computerprogramme auf einem Prozessor der Datenverarbeitungsanlage ausgeführt wird.

Das alternative erfindungsgemäße Computerprogramm, das Programmanweisungen umfasst, die eine Datenverarbeitungsanlage zur Ausführung des alternativen zweiten und/oder dritten erfindungsgemäßen Verfahrens veranlassen, wenn das erfindungsgemäße Computerprogramm auf einem Prozessor der Datenverarbeitungsanlage ausgeführt wird, ist zum Beispiel als Anwendungsprogramm (z.B. als App oder als Mobile-App) oder als Plugin-Modul für ein Nachrichten-Programm wie ein E-Mail-Programm ausgebildet. Zum Beispiel ist ein solches alternatives erfindungsgemäßes Computerprogramm ein proprietäres Computerprogramm, beispielsweise ein proprietäres Verschlüsselungs- und/oder Entschlüsselungsprogramm. Ein solches alternatives erfindungsgemäßes Computerprogramm kann zum Beispiel von dem Server zum Herunterladen über ein Netzwerk bereitgestellt werden. Jede Datenverarbeitungsanlage, die einem alternativen erfindungsgemäßen System zum geschützten Übermitteln eines Datenobjekts als Sendeeinrichtung und/oder als Empfangseinrichtung beitreten soll, kann ein solches alternatives erfindungsgemäßes Computerprogramm über das Netzwerk vom Server herunterladen.

Der Unterschied zwischen der alternativen Ausführungsform der Erfindung und den zuvor beschriebenen ersten, zweiten, dritten und vierten erfindungsgemäße Verfahren besteht darin, dass gemäß den erfindungsgemäßen Verfahren der alternativen Ausführungsform der Erfindung der Schlüssel zum Entschlüsseln des verschlüsselten Datenobjekts von der Sendeeinrichtung (und nicht vom Server) an die Empfangseinrichtung übertragen wird. Abgesehen von diesem Unterschied, sollen die zuvor insbesondere für das erste, zweite, dritte und vierte erfindungsgemäße Verfahren beschriebenen Merkmale, Definitionen und beispielhaften Ausgestaltungen auch als Offenbarung entsprechender Merkmale, Definitionen und beispielhafter Ausgestaltungen des alternativen ersten, zweiten, dritten und vierten erfindungsgemäße Verfahrens der alternativen Ausführungsform der Erfindung verstanden werden. Insbesondere soll dies für die Verschlüsselung des Datenobjekts, die Übertragung des verschlüsselten Datenobjekts von der Sendeeinrichtung an die Empfangseinrichtung, das Erzeugen des Schlüssels zum Entschlüsseln des verschlüsselten Datenobjekts und das Erzeugen des Schlüssels zum Verschlüsseln des Datenobjekts gelten.

Gemäß der alternativen Ausführungsform der Erfindung kann der Schlüssel zum Entschlüsseln des verschlüsselten Datenobjekts einerseits zusammen mit dem verschlüsselten Datenobjekt und andererseits getrennt von dem verschlüsselten Datenobjekt von der Sendeeinrichtung an den Adressaten gesendet oder, durch die Sendeeinrichtung, zum Abrufen durch den Adressaten bereitgestellt werden.

Der Schlüssel zum Entschlüsseln des verschlüsselten Datenobjekts wird zum Beispiel zeitlich getrennt von dem verschlüsselten Datenobjekt übertragen. Zum Beispiel wird der Schlüssel zum Entschlüsseln des verschlüsselten Datenobjekts vor oder nach dem Senden des verschlüsselten Datenobjekts oder vor oder nach dem Bereitstellen des verschlüsselten Datenobjekts zum Abrufen an den Adressaten gesendet oder zum Abrufen durch den Adressaten bereitgestellt. Alternativ oder zusätzlich, wird der Schlüssel zum Entschlüsseln des verschlüsselten Datenobjekts zum Beispiel über einen anderen Übertragungsweg als das verschlüsselte Datenobjekt übertragen.

Unter Senden des Schlüssels zum Entschlüsseln des verschlüsselten Datenobjekts von der Sendeeinrichtung an den Adressaten soll zum Beispiel verstanden werden, dass der Schlüssel zum Entschlüsseln des verschlüsselten Datenobjekts an eine elektronische Nachrichtenadresse des Adressaten versendet wird, dass der Schlüssel an eine Empfangseinrichtung des Adressaten gesendet wird und/oder dass der Schlüssel in einem oder mehreren Datenpaketen übertragen wird. Zum Beispiel wird der Schlüssel zum Entschlüsseln des verschlüsselten Datenobjekts an eine elektronische Nachrichtenadresse des Adressaten gesendet (also über einen anderen Übertragungsweg als das verschlüsselte Datenobjekt übertragen). Zum Beispiel wird der Schlüssel zum Entschlüsseln des verschlüsselten Datenobjekts an eine andere elektronische Nachrichtenadresse des Adressaten als das verschlüsselte Datenobjekt gesendet. Es ist jedoch auch denkbar, dass beide an dieselbe elektronische Nachrichtenadresse übertragen werden. Zum Beispiel wird der Schlüssel zum Entschlüsseln des verschlüsselten Datenobjekts von einer elektronischen Nachrichtenadresse des Absenders gesendet. Zum Beispiel wird der Schlüssel zum Entschlüsseln des verschlüsselten Datenobjekts von derselben elektronischen Nachrichtenadresse wie das verschlüsselte Datenobjekt gesendet. Dies ist beispielsweise vorteilhaft, weil der Adressat den Schlüssel zum Entschlüsseln des verschlüsselten Datenobjekts vom Absender (also einer im bekannten Instanz, z.B. einer dem Adressaten bekannten elektronischen Nachrichtenadresse) erhält.

Unter Bereitstellen, durch die Sendeeinrichtung, des Schlüssels zum Entschlüsseln des verschlüsselten Datenobjekts zum Abrufen durch den Adressaten soll zum Beispiel verstanden werden, dass die Sendeeinrichtung den Schlüssel zum Entschlüsseln des verschlüsselten Datenpakets zum Herunterladen über ein Netzwerk bereitstellt und/oder dass die Sendeeinrichtung den Schlüssel zum Entschlüsseln des verschlüsselten Datenpakets über ein Netzwerk an einen Downloadserver (z.B. einen Downloadserver eines Clouddienstes wie Dropbox und Rapidshare) überträgt, wobei der Downloadserver den Schlüssel zum Entschlüsseln des verschlüsselten Datenpakets zum Herunterladen über ein Netzwerk bereitstellt. Zum Beispiel wird der Schlüssel zum Entschlüsseln des verschlüsselten Datenobjekts an einen anderen Downloadserver als das verschlüsselte Datenobjekt übertragen (also über einen anderen Übertragungsweg als das verschlüsselte Datenobjekt übertragen). Es ist jedoch auch denkbar, dass beide an denselben Downloadserver übertragen werden.

Zum Beispiel wird der Schlüssel zum Entschlüsseln des verschlüsselten Datenobjekts von der Sendeeinrichtung verschlüsselt an den Adressaten gesendet oder zum Abrufen durch den Adressaten bereitgestellt. Zum Beispiel wird der Schlüssel zum Entschlüsseln des verschlüsselten Datenobjekts in einer HTTPS-Verbindung von der Sendeeinrichtung an die Empfangseinrichtung des Adressaten gesendet oder von der Empfangseinrichtung des Adressaten abgerufen.

Die zuvor in dieser Anmeldung beschriebenen beispielhaften Ausgestaltungen der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen.

Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Zeichnungen

In den Figuren zeigen
- Fig. 1:: ein Blockdiagramm einer beispielhaften Ausführungsform einer Datenverarbeitungsanlage;
- Fig. 2:: ein Blockdiagramm einer beispielhaften Ausführungsform des erfindungsgemäßen Systems;
- Fig. 3:: ein Ablaufdiagramm mit Schritten einer beispielhaften Ausführungsform des erfindungsgemäßen ersten Verfahrens;
- Fig. 4:: ein Ablaufdiagramm mit Schritten einer beispielhaften Ausführungsform des zweiten erfindungsgemäßen Verfahrens;
- Fig. 5:: ein Ablaufdiagramm mit Schritten einer beispielhaften Ausführungsform des dritten erfindungsgemäßen Verfahrens;
- Fig. 6:: ein Blockdiagramm einer beispielhaften Ausführungsform des erfindungsgemäßen Systems mit beispielhaften Schritten des vierten erfindungsgemäßen Verfahrens;

### Detaillierte Beschreibung einiger beispielhafter Ausführungsformen der vorliegenden Erfindung

Die vorliegende Erfindung wird im Folgenden anhand von beispielhaften Ausführungsformen beschrieben.

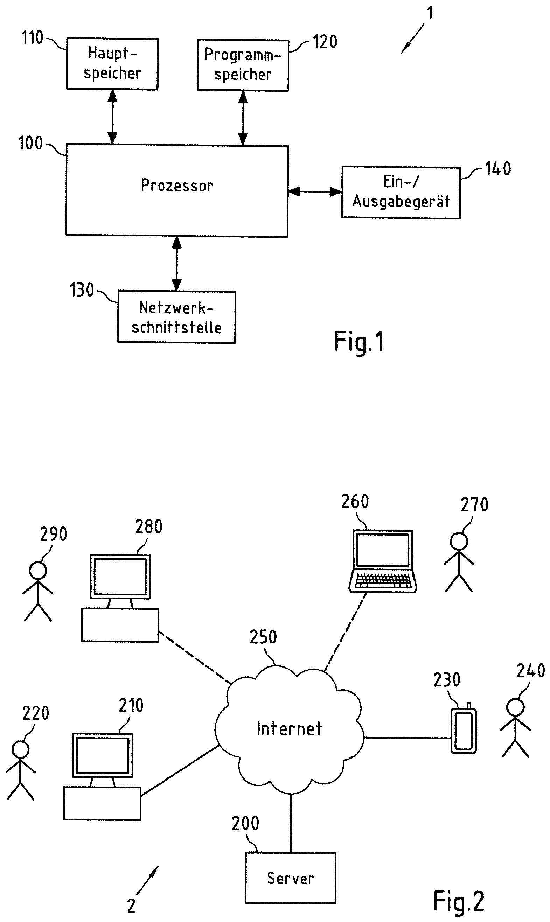

Fig. 1 zeigt ein Blockdiagramm einer beispielhaften Ausführungsform einer Datenverarbeitungsanlage 1. Datenverarbeitungsanlage 1 zeigt eine beispielhafte Ausführungsform eines erfindungsgemäßen Servers, einer erfindungsgemäßen Sendeeinrichtung und/oder einer erfindungsgemäßen Empfangseinrichtung.

Datenverarbeitungsanlage 1 kann beispielsweise ein Computer, ein Desktop-Computer, ein tragbarer Computer wie ein Laptop-Computer, ein Tablet-Computer, ein persönlicher digitaler Assistent, ein Smartphone und/oder ein Thinclient sein. Prozessor 100 der Datenverarbeitungsanlage 1 ist insbesondere als Mikroprozessor, Mikrokontrolleinheit wie Mikrocontroller, digitaler Signalprozessor (DSP), Anwendungsspezifische Integrierte Schaltung (ASIC) oder Field Programmable Gate Array (FPGA) ausgebildet.

Prozessor 100 führt Programmanweisungen aus, die in Programmspeicher 120 gespeichert sind, und speichert beispielsweise Zwischenergebnisse oder ähnliches in Hauptspeicher 110. Zum Beispiel ist Programmspeicher 120 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Hauptspeicher 110 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 120 ist vorzugsweise ein lokaler mit der Datenverarbeitungsanlage 1 fest verbundener Datenträger. Mit der Datenverarbeitungsanlage 1 fest verbundene Datenträger sind beispielsweise Festplatten, die in die Datenverarbeitungsanlage 1 eingebaut sind. Alternativ kann der Datenträger beispielsweise auch ein mit der Datenverarbeitungsanlage 1 trennbar verbindbarer Datenträger sein wie ein Speicher-Stick, ein Wechseldatenträger, eine tragbare Festplatte, eine CD, eine DVD und/oder eine Diskette.

Programmspeicher 120 enthält das Betriebssystem von Datenverarbeitungsanlage 1, das beim Starten der Datenverarbeitungsanlage 1 zumindest teilweise in Hauptspeicher 110 geladen und vom Prozessor 100 ausgeführt wird. Insbesondere wird beim Starten von Datenverarbeitungsanlage 1 zumindest ein Teil des Kerns des Betriebsystems in den Hauptspeicher 110 geladen und von Prozessor 100 ausgeführt. Das Betriebssystem von Datenverarbeitungsanlage 1 ist vorzugsweise ein Windows-, UNIX-, Linux-, Android-, Apple iOS- und/oder MAC-Betriebsystem.

Erst das Betriebssystem ermöglicht die Verwendung von Datenverarbeitungsanlage 1 zur Datenverarbeitung. Es verwaltet beispielsweise Betriebsmittel wie Hauptspeicher 110 und Programmspeicher 120, Netzwerkschnittstelle 130, Ein- und Ausgabegerät 140, stellt unter anderem durch Programmierschnittstellen anderen Programmen grundlegende Funktionen zur Verfügung und steuert die Ausführung von Programmen.

Prozessor 100 steuert die Netzwerkschnittstelle 130, wobei die Steuerung der Netzwerkschnittstelle 130 beispielsweise durch einen Treiber ermöglicht wird, der Teil des Kerns des Betriebssystems ist. Netzwerkschnittstelle 130 ist beispielsweise eine Netzwerkkarte, ein Netzwerkmodul und/oder ein Modem und ist eingerichtet, um eine Verbindung der Datenverarbeitungsanlage 1 mit einem Netzwerk herzustellen. Netzwerkschnittstelle 130 kann beispielsweise Daten über das Netzwerk empfangen und an Prozessor 100 weiterleiten und/oder Daten von Prozessor 100 empfangen und über das Netzwerk senden. Beispiele für ein Netzwerk sind ein lokales Netzwerk (LAN) wie ein Ethernet-Netzwerk oder ein IEEE 802-Netzwerk, ein großräumiges Netzwerk (WAN), ein drahtloses Netzwerk, ein drahtgebundenes Netzwerk, ein Mobilfunknetzwerk, ein Telefonnetzwerk und/oder das Internet.

Des Weiteren kann Prozessor 100 zumindest ein Ein-/Ausgabegerät 140 steuern. Ein-/Ausgabegerät 140 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 140 kann beispielsweise Eingaben eines Benutzers aufnehmen und an Prozessor 100 weiterleiten und/oder Informationen für den Benutzer von Prozessor 100 empfangen und ausgeben.

Fig. 2 zeigt ein Blockdiagramm einer beispielhaften Ausführungsform des erfindungsgemäßen Systems 2. System 2 umfasst einen Server 200, einen Desktop-Computer 210 und ein Smartphone 230. Ferner sind in Fig. 2 ein Benutzer 220 des Desktop-Computers 210 und ein Benutzer 240 des Smartphones 230 dargestellt. Server 200, Desktop-Computer 210 und Smartphone 230 entsprechen Datenverarbeitungsanlage 1 (vgl. Fig. 1) und sind über ihre jeweilige Netzwerkschnittstelle mit dem Internet 250 als Beispiel für ein Netzwerk verbunden.

Server 200 ist ein Beispiel für einen erfindungsgemäßen Server. Zum Beispiel ist auf Server 200 ein Computerprogramm installiert, das Programmanweisungen umfasst, die Server 200 zur Ausführung des ersten erfindungsgemäßen Verfahrens veranlassen, wenn das Computerprogramm auf dem Prozessor des Server 200 ausgeführt wird. Das Computerprogramm kann im Programmspeicher des Servers 200 gespeichert sein. Server 200 ist beispielsweise ein Server eines Zertifizierungsdiensteanbieters.

Desktop-Computer 210 und Smartphone 230 sind Beispiele für erfindungsgemäße Sende- und/oder Empfangseinrichtungen. Zum Beispiel ist auf Desktop-Computer 210 und Smartphone 230 ein proprietäres Verschlüsselungs- und/oder Entschlüsselungsprogramm installiert, das Programmanweisungen umfasst, die Desktop-Computer 210 und Smartphone 230 zur Ausführung des zweiten und/oder dritten erfindungsgemäßen Verfahrens veranlassen, wenn das proprietäre Verschlüsselungs- und/oder Entschlüsselungsprogramm auf dem Prozessor des Desktop-Computer 210 und des Smartphones 230 ausgeführt wird.

System 2 kann weitere Datenverarbeitungsanlagen aufweisen, zum Beispiel Laptop-Computer 260 mit Benutzer 270 und Desktop-Computer 280 mit Benutzer 290. Laptop-Computer 260 und Desktop-Computer 280 können ebenfalls Datenverarbeitungsanlage 1 entsprechen und über ihre jeweilige Netzwerkschnittstelle mit dem Internet 250 verbunden sein.

Laptop-Computer 260 und Desktop-Computer 280 sind keine erfindungsgemäßen Sende- und/oder Empfangseinrichtungen. Zum Beispiel ist das proprietäre Verschlüsselungs- und/oder Entschlüsselungsprogramm auf Laptop-Computer 260 und Desktop-Computer 280 nicht installiert. Allerdings kann Server 200 das proprietäre Verschlüsselungs- und/oder Entschlüsselungsprogramm zum Herunterladen über das Internet bereitstellen, so dass diese(s) Programm(e) auf Laptop-Computer 260 und Desktop-Computer 280 heruntergeladen und installiert werden kann/können. Dadurch können Laptop-Computer 260 und Desktop-Computer 280 problemlos erfindungsgemäße Sende- und/oder Empfangseinrichtungen werden.

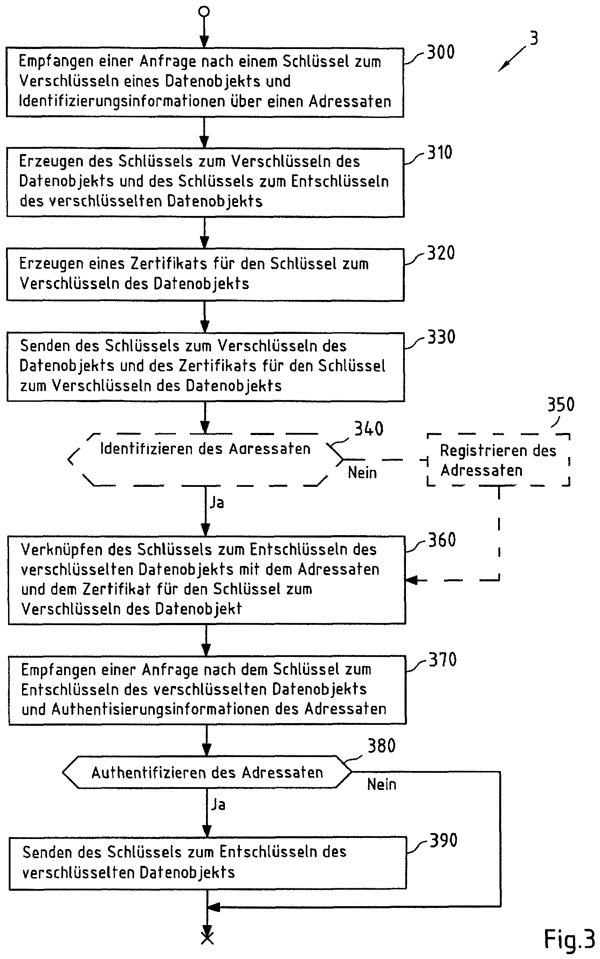

Im Folgenden wird für die Beschreibung der Fig. 3 bis 6 beispielhaft davon ausgegangen, das ein verschlüsseltes Datenobjekt in einer E-Mail von dem Desktop-Computer 210 an den Adressaten 240 gesendet werden soll. Die Erfindung und auch die in den Fig. 3 bis 6 beschriebenen beispielhaften Ausführungsformen der erfindungsgemäßen Verfahren sind jedoch nicht hierauf beschränkt und können ohne Weiteres auch mit anderen Sende- und/oder Empfangseinrichtungen und/oder anderen Übertragungswegen angewendet werden. Dementsprechend soll der Desktop-Computer 210 im Folgenden als Beispiel für eine erfindungsgemäße Sendeeinrichtung, der Benutzer 220 als Beispiel für den Absender des verschlüsselten Datenobjekts, das Smartphone 230 als Beispiel für eine erfindungsgemäße Empfangseinrichtung, der Benutzer 240 als Beispiel für den Adressaten des Datenobjekts und der Server 200 als Beispiel für einen erfindungsgemäßen Server verstanden werden.

Fig. 3 ist ein Ablaufdiagramm 3 mit Schritten einer beispielhaften Ausführungsform des ersten erfindungsgemäßen Verfahrens, die jedes Mal auf dem Server 200 ablaufen, wenn ein verschlüsseltes Datenobjekt von einer Sendeeinrichtung wie dem Desktop-Computer 210 an einen Adressaten gesendet oder zum Abrufen durch den Adressaten bereitgestellt werden soll.

In Schritt 300 empfängt der Server 200 vom Desktop-Computer 210 eine Anfrage nach dem Schlüssel zum Verschlüsseln des Datenobjekts und Identifizierungsinformationen über den Adressaten 240. Zum Beispiel empfängt der Server 200 die Anfrage nach dem Schlüssel zum Verschlüsseln des Datenobjekts und die Identifizierungsinformationen über eine Netzwerkschnittstelle, mit der er mit dem Internet 250 verbunden ist.

Die Anfrage nach dem Schlüssel zum Verschlüsseln des Datenobjekts kann eine vorgegebene Gültigkeitsdauer für einen Schlüssel zum Entschlüsseln des verschlüsselten Datenobjekts enthalten. Die vorgegebene Gültigkeitsdauer kann von dem Absender 220 an dem Desktop-Computer 210 eingegeben und/oder ausgewählt worden sein.

Die Identifizierungsinformationen enthalten zum Beispiel eine elektronische Nachrichtenadresse des Adressaten (z.B. eine E-Mail-Adresse oder eine DE-Mail-Adresse des Adressaten), eine Identifizierungsnummer des Adressaten (z.B. eine Kundenummer oder eine Registrierungsnummer des Adressaten), einen Benutzernamen des Adressaten, den Namen des Adressaten, die Anschrift des Adressaten und/oder eine Telefonnummer des Adressaten. Die Identifizierungsinformationen können von dem Absender 220 an dem Desktop-Computer 210 eingegeben und/oder ausgewählt worden sein.

In Schritt 310 erzeugt der Server 200 den Schlüssel zum Verschlüsseln des Datenobjekts und den Schlüssel zum Entschlüsseln des verschlüsselten Datenobjekts. Zum Beispiel ist der Schlüssel zum Verschlüsseln des Datenobjekts ein öffentlicher Schlüssel eines asymmetrischen Verschlüsselungsverfahrens und der Schlüssel zum Entschlüsseln des verschlüsselten Datenobjekts ist der korrespondierende private Schlüssel des asymmetrischen Verschlüsselungsverfahrens. Wie oben beschrieben, kann der Schlüssel alternativ auch von der Sendeeinrichtung erzeugt werden.

Zum Beispiel erzeugt der Server 200 den Schlüssel zum Verschlüsseln des Datenobjekts und den Schlüssel zum Entschlüsseln des verschlüsselten Datenobjekts in Reaktion auf die Anfrage nach dem Schlüssel zum Verschlüsseln des Datenobjekts. Es ist jedoch auch denkbar, dass der Server den Schlüssel zum Verschlüsseln des Datenobjekts und den Schlüssel zum Entschlüsseln des verschlüsselten Datenobjekts bereits vor dem Empfangen der Anfrage nach dem Schlüssel zum Verschlüsseln des Datenobjekts erzeugt hat.

Der Server 200 kann den Schlüssel zum Entschlüsseln des verschlüsselten Datenobjekts und den Schlüssel zum Verschlüsseln des Datenobjekts in einem Eintrag in einer Schlüsseldatenbank speichern, die sich beispielsweise im Programmspeicher des Servers 200 befindet. Falls die Anfrage nach dem Schlüssel zum Verschlüsseln des Datenobjekts eine vorgegebene Gültigkeitsdauer für den Schlüssel zum Entschlüsseln des verschlüsselten Datenobjekts enthält, kann diese Gültigkeitsdauer ebenfalls in dem Eintrag in der Schlüsseldatenbank gespeichert werden. Andernfalls kann ein Standardwert für die Gültigkeitsdauer oder keine Gültigkeitsdauer in dem Eintrag gespeichert werden.

In Schritt 320 erzeugt der Server 200 ein Zertifikat für den Schlüssel zum Verschlüsseln des Datenobjekts. Zum Beispiel ist der Server 200 ein Server einer anerkannten Zertifizierungsstelle. Das Zertifikat kann ein X.509-Zertifikat sein und die (vertrauenswürdige) Herkunft und/oder die Echtheit des Schlüssels zum Verschlüsseln des Datenobjekts bestätigen.

Der Server 200 kann das Zertifikat für den Schlüssel zum Verschlüsseln des Datenobjekts in demselben Eintrag in der Schlüsseldatenbank speichern, in dem der Schlüssel zum Entschlüsseln des verschlüsselten Datenobjekts und der Schlüssel zum Verschlüsseln des Datenobjekts gespeichert sind. Dies erleichtert das Finden des Schlüssels zum Entschlüsseln des verschlüsselten Datenobjekts.

In Schritt 330 sendet der Server 200 den Schlüssel zum Verschlüsseln des Datenobjekts und das Zertifikat für den Schlüssel zum Verschlüsseln des Datenobjekts an den Desktop-Computer 210. Zum Beispiel sendet der Server den Schlüssel zum Verschlüsseln des Datenobjekts und das Zertifikat für den Schlüssel zum Verschlüsseln des Datenobjekts über die Netzwerkschnittstelle, mit der er mit dem Internet 250 verbunden ist, an den Desktop-Computer 210. Alternativ kann der Server 200 den Schlüssel zum Verschlüsseln des Datenobjekts beispielsweise zum Herunterladen für den Desktop-Computer 210 bereitstellen.

In einem optionalen Schritt 340 prüft der Server 200, ob er den Adressaten 220 anhand der Identifizierungsinformationen identifizieren kann.

Zum Beispiel prüft der Server 200, ob er den Adressaten als registrierten Benutzer identifizieren kann.

Zum Beispiel befindet sich im Programmspeicher des Servers 200 eine Benutzerdatenbank mit Einträgen für alle beim Server 200 bzw. dem Zertifizierungsdiensteanbieter registrierten Benutzer. In der Benutzerdatenbank können in jedem Eintrag, der mit einem registrierten Benutzer assoziiert ist, Registrierungsinformationen über den jeweiligen Benutzer gespeichert sein, zum Beispiel eine elektronische Nachrichtenadresse (z.B. eine E-Mail-Adresse oder eine DE-Mail-Adresse), eine Identifizierungsnummer (z.B. eine Kundenummer oder eine Registrierungsnummer), ein Benutzername, ein Name, eine Anschrift, eine Telefonnummer, ein Authentisierungsmerkmal und/oder ein Passwort. Durch einen Abgleich der Identifizierungsinformationen mit den in der Benutzerdatenbank gespeicherten Einträgen kann der Server 200 prüfen, ob er den Adressaten 240 anhand der Identifizierungsinformationen als registrierten Benutzer identifizieren kann.

Wenn die Identifizierungsinformationen eine E-Mail-Adresse des Adressaten enthalten, kann der Server 200 in der Benutzerdatenbank nach einem Eintrag suchen, in dem diese E-Mail-Adresse als Registrierungsinformation über den mit dem Eintrag assoziierten Benutzer gespeichert ist. Der Server 200 identifiziert den mit diesem Eintrag assoziierten Benutzer dann als Adressat 240 des verschlüsselten Datenobjekts.

Falls der Server 200 den Adressaten 240 identifizieren kann (z.B. wenn er den Adressaten als registrierten Benutzer identifizieren kann), führt er Schritt 360 aus. Andernfalls führt er zunächst Schritt 350 aus.

In einem optionalen Schritt 350 fordert der Server 200 den Adressaten 240 zum Registrieren beim Server 200 auf. Zum Beispiel kann der Server an die elektronische Nachrichtenadresse des Adressaten, an die Anschrift des Adressaten oder an die Telefonnummer des Adressaten eine Nachricht mit einer Aufforderung und Anweisungen zur Registrierung beim Server übertragen oder zum Übertragen bereitstellen.

Wenn die Identifizierungsinformationen eine E-Mail-Adresse des Adressaten enthalten, kann der Server 200 an diese E-Mail-Adresse des Adressaten im optionalen Schritt 350 eine E-Mail mit einem Link und/oder einem Aktivierungscode für eine Registrierung beim Server 200 senden. Zum Beispiel stellt der Server 200 eine Website zur Registrierung beim Server 200 bereit. Der Adressat 240 kann über den Link in der Email auf diese Website gelangen.

Zum Beispiel greift der Adressat 240 im optionalen Schritt 350 von dem Smartphone 230 auf diese Website zu. Die Website kann den Adressaten 240 zur Eingabe des Aktivierungscodes und weiterer Registrierungsinformationen auffordern, um sich beim Server 200 zu registrieren. Zum Beispiel kann die Website den Adressaten 240 auffordern, zumindest eine E-Mail-Adresse, einen Benutzernamen und ein Passwort als Registrierungsinformationen einzugeben. Anschließend kann der Server 200 die von dem Adressaten eingegebenen Registrierungsinformationen in einem neuen mit dem Adressaten assoziierten Eintrag in der Benutzerdatenbank speichern.

In Schritt 360 assoziiert der Server 200 den Schlüssel zum Entschlüsseln des verschlüsselten Datenobjekts mit dem Adressaten 240 und dem Zertifikat für den Schlüssel zum Verschlüsseln des Datenobjekts.

Zum Beispiel speichert der Server einen Verweis auf den mit dem Adressaten assoziierten Eintrag in der Benutzerdatenbank in dem Eintrag in der Schlüsseldatenbank, in dem der Schlüssel zum Entschlüsseln des verschlüsselten Datenobjekts und das Zertifikat für den Schlüssel zum Verschlüsseln des Datenobjekts gespeichert sind.

Falls die optionalen Schritte 340 und 350 nicht durchgeführt werden, kann der Server in Schritt 360 beispielsweise die Identifizierungsinformationen ganz oder teilweise in dem Eintrag in der Schlüsseldatenbank speichern, in dem der Schlüssel zum Entschlüsseln des verschlüsselten Datenobjekts und das Zertifikat für den Schlüssel zum Verschlüsseln des Datenobjekts gespeichert sind.

In Schritt 370 empfängt der Server 200 eine Anfrage nach dem Schlüssel zum Entschlüsseln des verschlüsselten Datenobjekts und Authentisierungsinformationen des Adressaten 240 von dem Smartphone 230. Zum Beispiel empfängt der Server 200 die Anfrage nach dem Schlüssel zum Entschlüsseln des verschlüsselten Datenobjekts und die Authentisierungsinformationen des Adressaten 240 über die Netzwerkschnittstelle, mit der er mit dem Internet 250 verbunden ist.

Die Anfrage nach dem Schlüssel zum Entschlüsseln des verschlüsselten Datenobjekts kann das Zertifikat für den Schlüssel zum Verschlüsseln des Datenobjekts enthalten.

Die Authentisierungsinformationen enthalten zum Beispiel eine elektronische Nachrichtenadresse (z.B. eine E-Mail-Adresse oder eine DE-Mail-Adresse), eine Identifizierungsnummer (z.B. eine Kundenummer oder eine Registrierungsnummer), einen Benutzernamen, einen Namen, eine Anschrift, eine Telefonnummer, ein Authentisierungsmerkmal und/oder ein Passwort. Die Authentisierungsinformationen können von dem Adressaten 240 an dem Smartphone 230 eingegeben worden sein.

In Schritt 380 prüft der Server 200, ob er den Adressaten 240 anhand der Authentisierungsinformationen authentifizieren kann.

Zum Beispiel kann der Server 200 durch einen Abgleich der Authentisierungsinformationen mit den in der Benutzerdatenbank und/oder der Schlüsseldatenbank gespeicherten Einträgen prüfen, ob er den Adressaten 240 anhand der Authentisierungsinformationen authentifizieren kann.

Zum Beispiel kann der Server 200 in der Schlüsseldatenbank nach dem Eintrag suchen, in dem das Zertifikat für den Schlüssel zum Verschlüsseln des Datenobjekts gespeichert ist.

Falls dieser Eintrag eine Gültigkeitsdauer enthält, prüft der Server 200, ob die Anfrage nach dem Schlüssel zum Entschlüsseln des verschlüsselten Datenobjekts innerhalb der Gültigkeitsdauer empfangen wurde. Falls die Anfrage nach dem Schlüssel zum Entschlüsseln des verschlüsselten Datenobjekts innerhalb der Gültigkeitsdauer empfangen wurde, setzt der Server 200 das Verfahren fort. Andernfalls bricht er es ab und gibt beispielsweise eine entsprechende Fehlermeldung aus.

Falls dieser Eintrag einen Verweis auf den mit dem Adressaten 240 assoziierten Eintrag in der Benutzerdatenbank enthält, kann der Server anschließend prüfen, ob die Authentisierungsinformationen mit den in diesem Eintrag in der Benutzerdatenbank enthaltenen Registrierungsinformationen übereinstimmen. Wenn die Authentisierungsinformationen einen Benutzernamen und ein Passwort enthalten, überprüft der Server beispielsweise, ob der Benutzername und das Passwort mit dem Benutzernamen und dem Passwort in dem mit dem Adressaten assoziierten Eintrag in der Benutzerdatenbank übereinstimmen. Der Server authentifiziert den Adressaten, falls eine Übereinstimmung vorliegt.

Falls der Eintrag in der Schlüsseldatenbank Identifizierungsinformationen enthält, kann der Server anschließend prüfen, ob die Authentisierungsinformationen mit den in diesem Eintrag in der Schlüsseldatenbank enthaltenen Identifizierungsinformationen übereinstimmen. Wenn die Authentisierungsinformationen eine E-Mail-Adresse enthalten, überprüft der Server beispielsweise, ob die E-Mail-Adresse mit einer in den Identifizierungsinformationen enthaltenen E-Mail-Adresse übereinstimmt. Der Server authentifiziert den Adressaten, falls eine Übereinstimmung vorliegt.

Falls der Server 200 den Adressaten 240 authentifiziert, führt er Schritt 390 aus. Andernfalls beendet er das Verfahren und gibt beispielsweise eine Fehlermeldung aus. In Schritt 390 sendet der Server 200 den Schlüssel zum Entschlüsseln des verschlüsselten Datenobjekts an das Smartphone 230. Zum Beispiel sendet der Server den Schlüssel zum Entschlüsseln des Datenobjekts über die Netzwerkschnittstelle, mit der er mit dem Internet 250 verbunden ist, an das Smartphone 230. Zum Beispiel sendet der Server den Schlüssel zum Entschlüsseln des verschlüsselten Datenobjekts über eine verschlüsselte HTTPS-Verbindung. Alternativ kann der Server 200 den Schlüssel zum Entschlüsseln des Datenobjekts zum Herunterladen bereitstellen und dem Adressaten 240 beispielsweise eine E-Mail mit einem Link zum Herunterladen des Schlüssels senden.

Wie oben beschrieben, sind auch Varianten denkbar, in denen der Server 200 den Schlüssel zum Entschlüsseln des Datenobjekts an das Smartphone 230 "pusht" (also z.B. an das Smartphone 230 nach dem Erzeugen sendet, ohne das eine Anfrage nach dem Schlüssel zum Entschlüsseln des verschlüsselten Datenobjekts zuvor an dem Server 200 empfangen wurde). Eine solche Variante ist zum Beispiel alternativ zu den Schritten 370 bis 390 denkbar.

In einer anderen Variante, die zum Beispiel alternativ zu den Schritten 340 bis 390 denkbar ist, stellt der Server den Schlüssel zum Entschlüsseln des verschlüsselten Datenobjekts zum Abrufen durch den Adressaten bereit und sendet eine elektronische Nachricht mit einem Link zum Abrufen des Schlüssels zum Entschlüsseln des verschlüsselten Datenobjekts an eine elektronische Nachrichtenadresse des Adressaten (z.B. eine in den Identifizierungsinformationen enthaltene elektronische Nachrichtenadresse). Wenn der Adressat seine elektronischen Nachrichten mit der Empfangseinrichtung abruft, kann er den Link zum Abrufen des Schlüssels zum Entschlüsseln des verschlüsselten Datenobjekts verwenden. Der Schlüssel zum Entschlüsseln des verschlüsselten Datenobjekts kann z.B. als Datei ausgebildet sein und eine entsprechende Dateinamenerweiterung und/oder einen entsprechenden MIME-Type aufweisen, um als Schlüssel des erfindungsgemäßen Verfahrens erkannt zu werden.

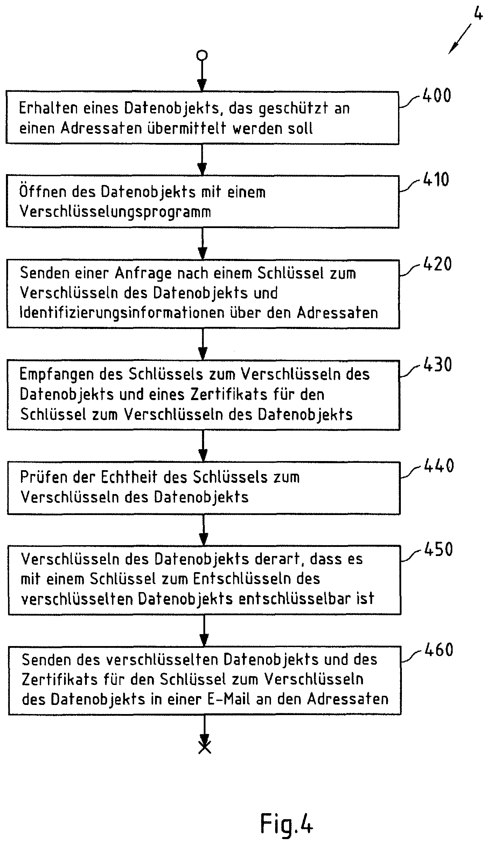

Fig. 4 ist ein Ablaufdiagramm 4 mit Schritten einer beispielhaften Ausführungsform des zweiten erfindungsgemäßen Verfahrens, die auf einer Sendeeinrichtung wie dem Desktop-Computer 210 ablaufen, wenn ein verschlüsseltes Datenobjekt von der Sendeeinrichtung an eine Empfangseinrichtung wie dem Smartphone 230 gesendet oder zum Abrufen bereitgestellt werden soll.

In Schritt 400 erhält der Desktop-Computer 210 ein Datenobjekt, das geschützt an einen Adressaten übermittelt werden soll. Zum Beispiel erhält der Desktop-Computer 210 das Datenobjekt durch Eingaben des Absenders 220 an einem Ein-/Ausgabegerät des Desktop-Computers 210. Vorzugsweise ist das Datenobjekt eine Nachricht (ggfs. mit einer oder mehreren Anlagen), die der Absender 220 geschützt an den Adressaten 240 übermitteln möchte.

Das Datenobjekt kann eine oder mehrere Dateien umfassen, zum Beispiel eine oder mehrere Dateien mit einem transportablen Dokumentenformat (z.B. ein PDF-Format), einem Nachrichtenformat (z-B. ein EML-Format), einem Textbearbeitungsdokumentenformat (z.B. ein DOC- oder XDOC-Format), einem Tabellenkalkulationsdokumentenformat (z.B. ein XLS- oder XLSX-Format), einem Datenkompressionsformat (z.B. ein ZIP- oder GZIP-Format) und/oder einem Mediendateiformat (z.B. ein AVI-, MOV-, MPEG- oder MP3-Format).

In Schritt 410 öffnet der Desktop-Computer 210 das Datenobjekt mit einem Programm wie einem Verschlüsselungsprogramm (z.B. einem proprietären Verschlüsselungsprogramm). Zum Beispiel veranlasst der Absender 220 den Desktop-Computer 210, das Verschlüsselungsprogramm auf dem Prozessor des Desktop-Computers 210 auszuführen und das Datenobjekt damit zu öffnen. Es ist jedoch auch denkbar, dass das Verschlüsselungsprogramm auf dem Prozessor des Desktop-Computers 210 bereits ausgeführt wird. Das Verschlüsselungsprogramm kann Programmanweisungen enthalten, die den Desktop-Computer 210 veranlassen, zumindest die Schritte 420 bis 450 auszuführen, wenn es auf dem Prozessor des Desktop-Computers 210 ausgeführt wird.

In Schritt 420 sendet der Desktop-Computer 210 eine Anfrage nach einem Schlüssel zum Verschlüsseln des Datenobjekts und Identifizierungsinformationen über den Adressaten an den Server 200. Zum Beispiel sendet der Desktop-Computer 210 die Anfrage für einen Schlüssel zum Verschlüsseln des Datenobjekts und die Identifizierungsinformationen über die Netzwerkschnittstelle, mit der er mit dem Internet 250 verbunden ist, an den Server 200.

Die Anfrage nach einem Schlüssel zum Verschlüsseln des Datenobjekts kann eine vorgegebene Gültigkeitsdauer für einen Schlüssel zum Entschlüsseln des verschlüsselten Datenobjekts enthalten. Zum Beispiel fordert das Verschlüsselungsprogramm den Absender auf, eine Gültigkeitsdauer für den Schlüssel zum Entschlüsseln des verschlüsselten Datenobjekts an einem Ein-/Ausgabegerät des Desktop-Computers 210 einzugeben und/oder auszuwählen.

Die Identifizierungsinformationen enthalten, wie oben beschrieben, zum Beispiel eine elektronische Nachrichtenadresse des Adressaten (z.B. eine E-Mailadresse oder eine DE-Mailadresse des Adressaten), eine Identifizierungsnummer des Adressaten (z.B. eine Kundenummer oder eine Registrierungsnummer des Adressaten), einen Benutzernamen des Adressaten, den Namen des Adressaten, die Anschrift des Adressaten und/oder eine Telefonnummer des Adressaten.

Zum Beispiel fordert das Verschlüsselungsprogramm den Absender auf, die Identifizierungsinformationen an einem Ein-/Ausgabegerät des Desktop-Computers 210 einzugeben und/oder auszuwählen. Zum Beispiel fordert das Verschlüsselungsprogramm den Absender auf, zumindest eine elektronische Nachrichtenadresse des Adressaten einzugeben und/oder aus einem elektronischen Adressbuch auszuwählen.

In Schritt 430 empfängt der Desktop-Computer 210 den Schlüssel zum Verschlüsseln des Datenobjekts und ein Zertifikat für den Schlüssel zum Verschlüsseln des Datenobjekts von dem Server 200. Zum Beispiel empfängt der Desktop-Computer 210 den Schlüssel zum Verschlüsseln des Datenobjekts und das Zertifikat für den Schlüssel zum Verschlüsseln des Datenobjekts über die Netzwerkschnittstelle, mit der er mit dem Internet 250 verbunden ist.

Zum Beispiel speichert das Verschlüsselungsprogramm den Schlüssel zum Verschlüsseln des Datenobjekts und das Zertifikat für den Schlüssel zum Verschlüsseln in einem temporären Verzeichnis in dem Programmspeicher des Desktop-Computers 230.

In Schritt 440 prüft der Desktop-Computer 210 die Echtheit des Schlüssels zum Verschlüsseln des Datenobjekts anhand des Zertifikats.

In Schritt 450 verschlüsselt der Desktop-Computer 210 das Datenobjekt mit dem Schlüssel zum Verschlüsseln des Datenobjekts. Wenn der Schlüssel zum Verschlüsseln des Datenobjekts ein öffentlicher Schlüssel eines asymmetrischen Verschlüsselungsverfahrens ist, verschlüsselt der Desktop-Computer 210 das Datenobjekt beispielsweise entsprechend diesem Verschlüsselungsverfahren.

Nach dem Verschlüsseln des Datenobjekts mit dem Schlüssel zum Verschlüsseln des Datenobjekts kann der Desktop-Computer 210 den Schlüssel zum Verschlüsseln des Datenobjekts löschen. Dadurch kann beispielsweise sichergestellt werden, dass kein weiteres Datenobjekt mit dem Schlüssel verschlüsselt wird.

Das verschlüsselte Datenobjekt kann als Datei ausgebildet sein, wobei das Dateiformat des verschlüsselten Datenobjekts beispielsweise ein proprietäres Dateiformat ist. Das verschlüsselte Datenobjekt kann eine entsprechende Dateinamenerweiterung und/oder einen entsprechenden MIME-Type aufweisen, um auf das proprietäre Dateiformat hinzuweisen.

In Schritt 460 sendet der Desktop-Computer 210 das verschlüsselte Datenobjekt und das Zertifikat für den Schlüssel zum Verschlüsseln des Datenobjekts in einer E-Mail an den Adressaten 240. Zum Beispiel sendet der Desktop-Computer 210 die E-Mail über die Netzwerkschnittstelle, mit der er mit dem Internet 250 verbunden ist, an einen Postausgangsserver eines E-Mail-Dienstes wie einen SMTP-Server.

Zum Beispiel ist das verschlüsselte Datenobjekt ein Teil der E-Mail. Zum Beispiel befindet sich das verschlüsselte Datenobjekt im Anhang der E-Mail.

Das Verschlüsselungsprogramm kann Programmanweisungen enthalten, die den Desktop-Computer 210 veranlassen Schritt 460 auszuführen, wenn es auf dem Prozessor des Desktop-Computers 210 ausgeführt wird. Es ist jedoch auch denkbar, dass der Benutzer den Desktop-Computer 210 durch Eingaben an einem Ein-/Ausgabegerät des Desktop-Computers 210 zum Ausführen des Schritts 460 veranlasst, zum Beispiel durch entsprechende Eingaben in einem E-Mail-Programm.

Wie oben beschrieben, sind jedoch auch andere Übertragungswege des verschlüsselten Datenobjekts denkbar. Zum Beispiel kann der Desktop-Computer 210 das verschlüsselte Datenobjekt an einen Downloadserver eines Clouddienstes wie beispielsweise Dropbox übertragen, wobei der Downloadserver das verschlüsselte Datenobjekt zum Herunterladen bereitstellt.

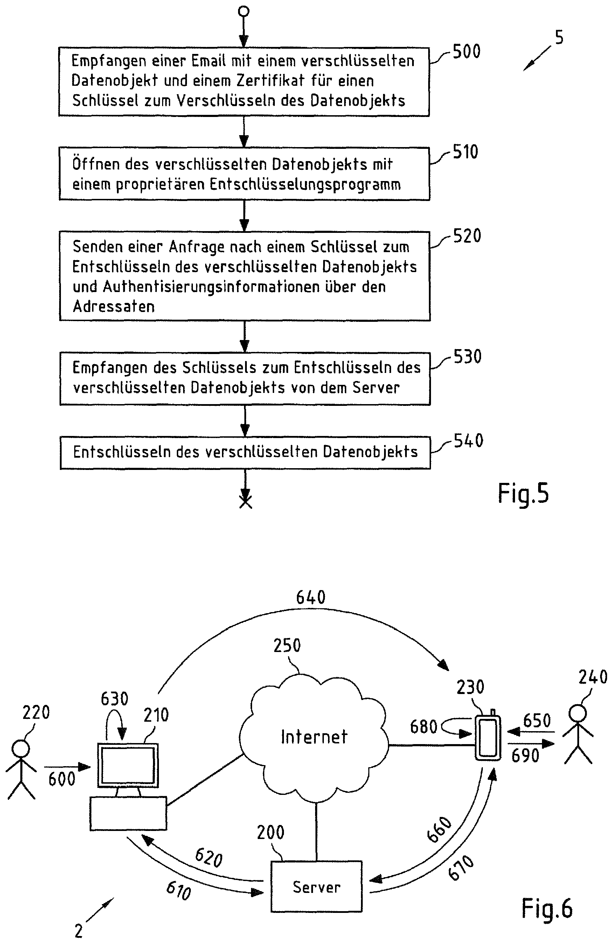

Fig. 5 ist ein Ablaufdiagramm 5 mit Schritten einer beispielhaften Ausführungsform des dritten erfindungsgemäßen Verfahrens, die auf einer Empfangseinrichtung wie dem Smartphone 230 ablaufen, wenn ein verschlüsseltes Datenobjekt von einer Sendeeinrichtung wie dem Desktop-Computer 210 an die Empfangseinrichtung übertragen oder zum Übertragen bereitgestellt werden soll.

In Schritt 500 empfängt das Smartphone 230 eine Email mit einem verschlüsselten Datenobjekt und einem Zertifikat für einen Schlüssel zum Verschlüsseln des Datenobjekts. Zum Beispiel empfängt das Smartphone 230 die E-Mail mit dem verschlüsselten Datenobjekt und dem Zertifikat für den Schlüssel zum Verschlüsseln des Datenobjekts über die Netzwerkschnittstelle, mit der es mit dem Internet 250 verbunden ist.

Zum Beispiel ruft das Smartphone 230 die E-Mail über die Netzwerkschnittstelle, mit der es mit dem Internet 250 verbunden ist, von einem Posteingangsserver eines E-Mail-Dienstes wie POP3-Server ab.

Zum Beispiel ist das verschlüsselte Datenobjekt ein Teil der E-Mail. Zum Beispiel befindet sich das verschlüsselte Datenobjekt im Anhang der E-Mail.

Zum Beispiel veranlasst der Adressat 240 das Smartphone 230 durch Eingaben an einem Ein-/Ausgabegerät des Smartphones 230 zum Ausführen des Schritts 500, zum Beispiel durch entsprechende Eingaben in einem E-Mail-Programm.

In Schritt 510 öffnet das Smartphone 230 das verschlüsselte Datenobjekt mit einem Programm wie einem Entschlüsselungsprogramm (z.B. einem proprietären Entschlüsselungsprogramm). Zum Beispiel veranlasst der Adressat 240 das Smartphone 230, das Entschlüsselungsprogramm auf dem Prozessor des Smartphones 230 auszuführen und das verschlüsselte Datenobjekt damit zu öffnen. Wenn das verschlüsselte Datenobjekt als Datei ausgebildet ist und ein proprietäres Dateiformat hat, kann das proprietäre Entschlüsselungsprogramm beim Betriebssystem des Smartphones 230 als Standardprogramm zum Öffnen des verschlüsselten Dateiprogramm registriert sein.

Das proprietäre Entschlüsselungsprogramm kann Programmanweisungen enthalten, die das Smartphone 230 veranlassen, zumindest die Schritte 520 bis 540 auszuführen, wenn es auf dem Prozessor des Smartphones 230 ausgeführt wird.

In Schritt 520 sendet das Smartphone 230 eine Anfrage nach einem Schlüssel zum Entschlüsseln des verschlüsselten Datenobjekts und Authentisierungsinformationen des Adressaten 240. Zum Beispiel sendet das Smartphone 230 die Anfrage nach dem Schlüssel zum Entschlüsseln des verschlüsselten Datenobjekts und die Authentisierungsinformationen des Adressaten 240 über die Netzwerkschnittstelle, mit der es mit dem Internet 250 verbunden ist, an den Server 200.

Die Anfrage nach dem Schlüssel zum Entschlüsseln des verschlüsselten Datenobjekts kann das Zertifikat für den Schlüssel zum Verschlüsseln des Datenobjekts enthalten.

Die Authentisierungsinformationen enthalten, wie oben beschrieben, zum Beispiel eine elektronische Nachrichtenadresse (z.B. eine E-Mail-Adresse oder eine DE-Mail-Adresse), eine Identifizierungsnummer (z.B. eine Kundenummer oder eine Registrierungsnummer), einen Benutzernamen, einen Namen, eine Anschrift, eine Telefonnummer, ein Authentisierungsmerkmal und/oder ein Passwort.

Zum Beispiel fordert das Entschlüsselungsprogramm den Adressaten 240 auf, die Authentisierungsinformationen an einem Ein-/Ausgabegerät des Smartphones 230 einzugeben und/oder zum Einlesen bereitzustellen. Zum Beispiel fordert das Verschlüsselungsprogramm den Adressaten 240 auf, zumindest einen Benutzernamen und ein Passwort einzugeben. Zusätzlich oder alternativ kann das Verschlüsselungsprogramm den Adressaten 240 auffordern, ein Authentisierungsmerkmal wie Informationen von einer Smartcard und/oder ein biometrisches Merkmal zum Einlesen als Authentisierungsinformation an einem Ein-/Ausgabegerät des Smartphones 230 bereitzustellen.

In Schritt 530 empfängt das Smartphone 230 den Schlüssel zum Entschlüsseln des verschlüsselten Datenobjekts von dem Server 200. Zum Beispiel empfängt das Smartphone 230 den Schlüssel zum Entschlüsseln des verschlüsselten Datenobjekts über die Netzwerkschnittstelle, mit der es mit dem Internet 250 verbunden ist. Zum Beispiel empfängt es den Schlüssel zum Entschlüsseln des verschlüsselten Datenobjekts über eine verschlüsselte HTTPS-Verbindung.

Zum Beispiel speichert das Entschlüsselungsprogramm den Schlüssel zum Entschlüsseln des verschlüsselten Datenobjekts in einem temporären Verzeichnis in dem Programmspeicher des Smartphones 230 oder in einem temporären Verzeichnis in einem virtuellen Datenträger im Hauptspeicher des Smartphones (z.B. in einer sogenannten RAM-Disk oder einem sogenannten RAM-Drive). Zum Beispiel darf nur das Entschlüsselungsprogramm auf das temporäre Verzeichnis zugreifen.

In Schritt 540 entschlüsselt das Smartphone 230 das verschlüsselte Datenobjekt und stellt dem Adressaten 240 das entschlüsselte Datenobjekt zum Anzeigen auf einem Ausgabegerät des Smartphones 230 und/oder zum Bearbeiten durch ein Ein-/Ausgabegerät des Smartphones 230 bereit. Zum Beispiel speichert das Entschlüsselungsprogramm das entschlüsselte Datenobjekt in einem temporären Verzeichnis in dem Programmspeicher des Smartphones 230 oder in einem temporären Verzeichnis in einem virtuellen Datenträger im Hauptspeicher des Smartphones (z.B. in einer sogenannten RAM-Disk oder einem sogenannten RAM-Drive). Zum Beispiel dürfen nur das Entschlüsselungsprogramm und/oder vorgegebene Programm auf das temporäre Verzeichnis zugreifen.

Das Entschlüsselungsprogramm kann Programmanweisungen enthalten, die das Smartphone 230 veranlassen, wenn das Entschlüsselungsprogramm auf dem Prozessor des Smartphones ausgeführt wird und der Adressat 240 entweder das Anzeigen und/oder Bearbeiten des entschlüsselten Datenobjekts beenden möchte oder das Entschlüsselungsprogramm beenden möchte, den Schlüssel zum Entschlüsseln des verschlüsselten Datenobjekts und das entschlüsselte Datenobjekt von dem Smartphone 230 zu löschen. Wenn der Adressat das entschlüsselte Datenobjekt erneut Anzeigen und/oder Bearbeiten möchte, müssen dann die Schritte 500 bis 540 erneut ausgeführt werden.

Fig. 6 zeigt ein Blockdiagramm einer beispielhaften Ausführungsform erfindungsgemäßen Systems 2 mit beispielhaften Schritten des vierten erfindungsgemäßen Verfahrens.

Absender 220 möchte eine verschlüsselte Nachricht an einen Adressaten 240 versenden. Der Adressat 240 soll die verschlüsselte Nachricht vom Absender 220 empfangen und entschlüsseln können. Die Kommunikation soll über die E-Mail-Adressen der Teilnehmer erfolgen. Email ist derzeit am weitesten verbreitet und die meisten Benutzer sind im Gebrauch geübt.

In einem ersten Schritt 600 verwendet der Absender 220 eine dedizierte Applikation wie ein Verschlüsselungsprogramm für das Verschlüsseln und Versenden der Nachricht an den Adressaten. Diese Applikation kann auch ein Plugin zu einem existierenden EmailClient oder einem Browser sein. Das Verschlüsselungsprogramm wird, wie oben beschrieben, auf einem Prozessor des Desktop-Computers 210 ausgeführt.

Das Verschlüsselungsprogramm verbindet sich in Schritt 610 mit Server 200 des Zertifizierungsdiensteanbieters. In Schritt 610 wird beispielsweise die Anfrage nach einem Schlüssel zum Verschlüsseln des Datenobjekts und die Identifizierungsinformationen über den Adressaten 240 von dem Desktop-Computer 210 (vgl. oben Schritt 420) an den Server 200 (vgl. oben Schritt 300) übertragen.

Der Server erzeugt als Reaktion auf die Anfrage ein asymmetrisches Schlüsselpaar (z.B. für das RSA-Verschlüsselungsverfahren und/oder das Elliptische-Kurven-Kryptographie-Verschlüsselungsverfahren) für den Adressaten (vgl. oben Schritt 310). Außerdem kann der Server des Zertifizierungsdiensteanbieters auch ein Zertifikat für den öffentlichen Schlüssel des neuen Schlüsselpaars erzeugen (vgl. oben Schritt 320).

In einem Schritt 620 werden der Schlüssel zum Verschlüsseln des Datenobjekts (also der neue öffentliche Schlüssel des neuen Schlüsselpaares) und das Zertifikat für den Schlüssel zum Verschlüsseln des Datenobjekts von dem Server 200 (vgl. Schritt 330) an den Desktop-Computer 210 (vgl. Schritt 430) übertragen.

In Schritt 630 erhält die Applikation den Schlüssel zum Verschlüsseln des Datenobjekts und verschlüsselt die Nachricht damit.

Die verschlüsselte Nachricht ist zum Beispiel als Datei ausgebildet und kann mit einer Dateinamen-Erweiterung oder einem MIME Type versehen werden, damit sie als Nachricht bzw. Datei des erfindungsgemäßen Verfahrens erkannt werden kann. Es sind auch andere Mechanismen denkbar, solange die verschlüsselte Nachricht bzw. die verschlüsselte Datei als Nachricht bzw. Datei des erfindungsgemäßen Verfahrens erkannt werden kann.

In einem Schritt 640 wird die verschlüsselte Nachricht zusammen mit dem Zertifikat oder ein anderen eindeutigen Merkmal des Zertifikats als Anhang einer Email an den Adressaten 240 versendet (vgl. oben Schritt 460), damit der Server 200 den zur Nachricht gehörenden Schlüssel bereitstellen kann. Die Email selbst kann entsprechende Hinweise und Links auf die Applikation enthalten, die für das Entschlüsseln der verschlüsselten Nachricht benötigt wird.

In Schritt 650 kann der Anhang der Email automatisch mit der Applikation wie einem Entschlüsselungsprogramm geöffnet werden (vgl. oben Schritt 510), wenn der Adressat 240 dieses Programm bereits besitzt und es beim Betriebssystem des Smartphones 230 für das Öffnen von mit dem erfindungsgemäßen Verfahren verschlüsselten Nachrichten registriert ist. Grundsätzlich funktioniert dies sowohl bei klassischen Computer-Betriebssystemen als auch bei allen bekannten Smartphone-Betriebssystemen.

Wenn der Adressat 240 die das Entschlüsselungsprogramm noch nicht besitzt und nicht beim Server 200 registriert ist, dann kann der Adressat in Schritt 650 das Entschlüsselungsprogramm beispielsweise über den Link in der Email auf das Smartphone 230 herunterladen. Beim Installieren kann das Entschlüsselungsprogramm beim Betriebssystem des Smartphones 230 automatisch für die Dateinamen-Erweiterung oder den MIME-Type registriert werden.

Außerdem findet eine Registrierung des Adressaten beim Zertifizierungsdiensteanbieter bzw. beim Server 200 des Zertifizierungsdiensteanbieters statt (vgl. oben Schritt 350). Im einfachsten Fall kann diese Registrierung über die Email-Adresse des Adressaten erfolgen, zum Beispiel wählt der Adressat 240 beim Registrieren Benutzername und Passwort beim Zertifizierungsdienst und erhält dann eine Nachricht vom Zertifizierungsdiensteanbieter, mit dem er die Anmeldung bestätigt.

Nach dem Start der Applikation kann die Applikation den Adressaten 240 auffordern, bestimmte Benutzerdaten wie den Benutzernamen und ein Passwort als Authentisierungsinformationen einzugeben.

In einem Schritt 660 meldet sich die Applikation mit den Authentisierungsinformationen des Adressaten 240 bei dem Server 200 des Zertifizierungsdiensts an und ruft nach der Authentifizierung des Adressaten 240 durch den Server 200 (vgl. oben Schritt 380) den neuen privaten Schlüssel und das Zertifikat ab. Zum Beispiel werden im Schritt 660 die Anfrage nach dem Schlüssel zum Entschlüsseln des verschlüsselten Datenobjekts und die Authentisierungsinformationen des Adressaten 240 von dem Smartphone 230 (vgl. Schritt 520) an den Server 200 (vgl. Schritt 370) übertragen.

In einem Schritt 670 wird der Schlüssel zum Entschlüsseln des verschlüsselten Datenobjekts von dem Server 200 (vgl. Schritt 390) an das Smartphone 230 (vgl. Schritt 530) übertragen.

In Schritt 680 entschlüsselt die Applikation die verschlüsselte Nachricht, so dass sich der Adressat 240 die Nachricht in Schritt 690 anzeigen lassen kann. Beim Schließen der Applikation wird der private Schlüssel vom Gerät gelöscht.

Die vorliegende Erfindung gestaltet das Versenden und Empfangen kryptographisch abgesicherter Daten über das Internet auch für offene Benutzergruppen transparent und einfach. Sie eignet sich aber auch für geschlossene Benutzergruppen wie Benutzergruppen, die heterogene Technologien wie mobile und nicht mobile Geräte verwenden wollen. Außerdem wird die Sicherheit erhöht, da das Zertifikat und das Schlüsselpaar für genau eine verschlüsselte Nachricht verwendet werden.

Da der private Schlüssel jedes Mal abgerufen werden muss, kann das Lesen der Nachricht zeitlich begrenzt werden. Der zugehörige private Schlüssel wird einfach nicht mehr vom Zertifizierungsdiensteanbieter (bzw. dessen Server) herausgegeben bzw. gelöscht. Der Zertifizierungsdiensteanbieter, der die Schlüssel generiert, kann die Nachricht nur dann lesen, wenn er sie auf dem Weg von A nach B abfängt. Die Nachricht sollte daher nicht an den Zertifizierungsdiensteanbieter oder über einen von ihm angebotenen Service versendet werden.

Für das Zustellen der Nachricht können auch Cloudspeicher verwendet werden, besonders wenn diese sehr groß sind.

Benutzergruppen, die ihre Zertifizierungsdienste selbst sicher betreiben, sind weitestgehend sicher gegen das Abhören durch Dritte.

Das Zertifikat vereinfacht das Finden des richtigen Schlüssels für das Entschlüsseln.

Für alle bei den erfindungsgemäßen Verfahren verwendeten Technologien können vorhandene Standards, Implementierungen und deren Sicherheitsbewertungen verwendet werden. Sie sind deshalb einfach zu realisieren und sicherheitstechnisch zu bewerten.

Es sind Varianten der erfindungsgemäßen Verfahren denkbar, bei denen die Schlüssel durch das Verschlüsselungsprogramm erzeugt werden, das Zertifikat wird aber weiterhin vom Zertifizierungsdiensteanbieter ausgestellt, der auch die Identifikation bzw. Authentifizierung des Adressaten durchführt.

Außerdem sind die erfindungsgemäßen Verfahren auch für digitale Signaturen anwendbar.

Die verschlüsselte Nachricht kann zusätzlich Vorgaben enthalten, welche Operationen mit der entschlüsselten Nachricht durchgeführt werden dürfen, zum Beispiel nur Anzeige oder Anzeigen und Weitersenden, aber nicht Speichern. Das Entschlüsselungsprogramm, das für die Entschlüsselung und Anzeige verwendet wird, kann diese Vorgaben dann entsprechend umsetzen.

Die Abfolge der einzelnen Verfahrenschritte in den einzelnen Ablaufdiagrammen ist nicht zwingend, soweit nicht anders angegeben sind alternative Abfolgen der Verfahrensschritte denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

Die in dieser Spezifikation beschriebenen beispielhaften Ausführungsformen der vorliegenden Erfindung sollen auch in allen Kombinationen miteinander offenbart sein. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrenschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Unter die Formulierung "und/oder" fallen sowohl der Fall "und" als auch der Fall "oder". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, umfassend:
- Empfangen (300) von Identifizierungsinformationen über einen Adressaten (240), an den ein verschlüsseltes Datenobjekt von einer Sendeeinrichtung (210) gesendet oder dem das verschlüsselte Datenobjekt, durch die Sendeeinrichtung (210), zum Abrufen bereitgestellt werden soll, von der Sendeeinrichtung (210) an einem Server (200),
- Assoziieren (360) der Identifizierungsinformationen mit einem Schlüssel zum Entschlüsseln des verschlüsselten Datenobjekts durch den Server (200),
- Erzeugen (320) eines Zertifikats für einen Schlüssel zum Verschlüsseln des Datenobjekts durch den Server (200), wobei der Server (200) dem Zertifikat für den Schlüssel zum Verschlüsseln des Datenobjekts den Schlüssel zum Entschlüsseln des verschlüsselten Datenobjekts zuordnet, wobei der Server (200) die Zuordnung zwischen dem Zertifikat für den Schlüssel zum Verschlüsseln des Datenobjekts und dem Schlüssel zum Entschlüsseln des verschlüsselten Datenobjekts in einem Eintrag in einer Datenbank speichert, wobei der Schlüssel zum Entschlüsseln des verschlüsselten Datenobjekts und das Zertifikat für den Schlüssel zum Verschlüsseln des Datenobjekts in dem Eintrag in der Datenbank gespeichert sind, wobei der Schlüssel zum Verschlüsseln des Datenobjekts ein öffentlicher Schlüssel eines asymmetrischen Verschlüsselungsverfahrens ist, und wobei der Schlüssel zum Entschlüsseln des verschlüsselten Datenobjekts ein korrespondierender privater Schlüssel des asymmetrischen Verschlüsselungsverfahrens ist,
- Senden des Zertifikats für den Schlüssel zum Verschlüsseln des Datenobjekts von dem Server (200) an die Sendeeinrichtung,
- Empfangen (370) einer Anfrage nach dem Schlüssel zum Entschlüsseln des verschlüsselten Datenobjekts an dem Server, wobei die Anfrage Authentisierungsinformationen des Adressaten (240) und das Zertifikat für den Schlüssel zum Verschlüsseln des Datenobjekts umfasst,
- Authentifizieren (380) des Adressaten (240) durch den Server (200), und
- Senden (390) des Schlüssels zum Entschlüsseln des verschlüsselten Datenobjekts, der dem Zertifikat für den Schlüssel zum Verschlüsseln des Datenobjekts in dem Eintrag in der Datenbank zugeordnet ist, an den Adressaten durch den Server (200) oder Bereitstellen, durch den Server (200), des Schlüssels zum Entschlüsseln des verschlüsselten Datenobjekts, der dem Zertifikat für den Schlüssel zum Verschlüsseln des Datenobjekts in dem Eintrag in der Datenbank zugeordnet ist, zum Abrufen durch den Adressaten (240), wobei der Server den Schlüssel zum Entschlüsseln des verschlüsselten Datenobjekts nach dem Senden oder Bereitstellen löscht.

2. Verfahren nach Anspruch 1, wobei der Schlüssel zum Entschlüsseln des verschlüsselten Datenobjekts oder ein Link zum Abrufen des Schlüssels zum Entschlüsseln des verschlüsselten Datenobjekts an eine elektronische Nachrichtenadresse des Adressaten gesendet wird.

3. Verfahren nach Anspruch 1 bis 2, wobei der Schlüssel zum Entschlüsseln des verschlüsselten Datenobjekts eine vorgegebene Gültigkeitsdauer hat, und wobei der Schlüssel von dem Server nur dann an den Adressaten (240) gesendet oder zum Abrufen durch den Adressaten bereitgestellt wird, wenn der Server (200) die Anfrage nach dem Schlüssel innerhalb der vorgegebenen Gültigkeitsdauer empfängt.

4. Verfahren nach einem der Ansprüche 1 bis 3 ferner umfassend:
- Erzeugen (310) des Schlüssels zum Verschlüsseln des Datenobjekts und/oder des Schlüssels zum Entschlüsseln des Datenobjekts durch den Server (200), und
- Senden (330) des Schlüssels zum Verschlüsseln des Datenobjekts von dem Server (200) an die Sendeeinrichtung (210) oder Bereitstellen, durch den Server (200), des Schlüssels zum Verschlüsseln des Datenobjekts zum Abrufen durch die Sendeeinrichtung (210).

5. Verfahren nach einem der Ansprüche 1 bis 4, wobei der Schlüssel zum Entschlüsseln des verschlüsselten Datenobjekts ein Einmalschlüssel ist und/oder wobei nur das verschlüsselte Datenobjekt mit dem Schlüssel zum Entschlüsseln des verschlüsselten Datenobjekts entschlüsselbar ist.

6. Server (200), umfassend:
- ein oder mehrere Mittel zum Ausführen der Schritte des Verfahrens nach einem der Ansprüche 1 bis 5.

7. Computerprogramm, umfassend:
- Programmanweisungen, die eine Datenverarbeitungsanlage (1) zur Ausführung der Schritte des Verfahrens nach einem der Ansprüche 1 bis 5 veranlassen, wenn das Computerprogramm auf einem Prozessor (100) der Datenverarbeitungsanlage (1) ausgeführt wird.

## Claims

1. Method comprising:
- receiving (300) identification information on an addressee (240) to whom an encrypted data object is to be sent from a sending device (210) or for whom the encrypted data object is to be provided, by the sending device (210), for retrieval from the sending device (210) at a server (200),
- associating (360) the identification information with a key for decrypting the encrypted data object by the server (200),
- generating (320) a certificate for a key for encrypting the data object by the server (200), wherein the server (200) associates the certificate for the key for encrypting the data object with the key for decrypting the encrypted data object, wherein the server (200) stores the association between the certificate for the key for encrypting the data object and the key for decrypting the encrypted data object in an entry in a database, wherein the key for decrypting the encrypted data object and the certificate for the key for encrypting the data object are stored in the entry in the database, wherein the key for encrypting the data object is a public key of an asymmetric encryption method, and wherein the key for decrypting the encrypted data object is a corresponding private key of the asymmetric encryption method,
- sending the certificate for the key for encrypting the data object from the server (200) to the sending device,
- receiving (370) a request for the key to decrypt the encrypted data object at the server, the request comprising authentication information of the addressee (240) and the certificate for the key to encrypt the data object,
- authenticating (380) the addressee (240) by the server (200), and
- sending (390) the key for decrypting the encrypted data object associated with the certificate for the key for encrypting the data object in the entry in the database to the addressee by the server (200) or providing, by the server (200), the key for decrypting the encrypted data object associated with the certificate for the key for encrypting the data object in the entry in the database for retrieval by the addressee (240), wherein the server deletes the key for decrypting the encrypted data object after sending or providing.

2. A method according to claim 1, wherein the key for decrypting the encrypted data object or a link for retrieving the key for decrypting the encrypted data object is sent to an electronic message address of the addressee.

3. A method according to any one of claims 1 to 2, wherein the key for decrypting the encrypted data object has a predetermined validity period, and wherein the key is sent from the server to the addressee (240) or provided for retrieval by the addressee only if the server (200) receives the request for the key within the predetermined validity period.

4. A method according to any one of claims 1 to 3 further comprising:
- generating (310), by the server (200), the key for encrypting the data object and/or the key for decrypting the data object, and
- sending (330) the key for encrypting the data object from the server (200) to the sending device (210) or providing, by the server (200), the key for encrypting the data object for retrieval by the sending device (210).

5. A method according to any one of claims 1 to 4, wherein the key for decrypting the encrypted data object is a one-time key and/or wherein only the encrypted data object is decryptable with the key for decrypting the encrypted data object.

6. Server (200) comprising:
- one or more means for carrying out the steps of the method according to any one of claims 1 to 5.

7. Computer program comprising:
- program instructions causing a data processing system (1) to perform the steps of the method according to any one of claims 1 to 5, when the computer program is executed on a processor (100) of the data processing system (1).

## Revendications

1. Procédé comprenant :
- recevoir (300) au niveau d'un serveur (200), depuis un dispositif d'émission (210), des informations d'identification concernant un destinataire (240) auquel un objet de données crypté doit être transmis depuis un dispositif d'émission (210) ou auquel l'objet de données crypté doit être mis à disposition par le dispositif d'émission (210) pour être récupéré,
- associer (360) les informations d'identification à une clé pour le décryptage de l'objet de données crypté par le serveur (200),
- générer (320) un certificat pour une clé pour décrypter l'objet de données par le serveur (200), le serveur (200) associant la clé pour décrypter l'objet de données crypté au certificat pour la clé pour décrypter l'objet de données, le serveur (200) stockant l'association entre le certificat pour la clé pour décrypter l'objet de données et la clé pour décrypter l'objet de données crypté dans une entrée d'une base de données, la clé pour décrypter l'objet de données crypté et le certificat pour la clé pour crypter l'objet de données étant stockés dans l'entrée de la base de données, la clé pour crypter l'objet de données étant une clé publique d'un procédé de cryptage asymétrique, et la clé pour décrypter l'objet de données crypté étant une clé privée correspondante du procédé de cryptage asymétrique,
- envoyer le certificat pour la clé de cryptage de l'objet de données à partir serveur (200) vers le dispositif d'émission,
- recevoir (370), au niveau du serveur, une requête pour la clé pour décrypter l'objet de données crypté, la requête comprenant des informations d'authentification du destinataire (240) et le certificat de la clé pour crypter l'objet de données,
- authentifier (380) le destinataire (240) par le serveur (200), et
- envoyer (390) au destinataire, par le serveur (200), la clé de décryptage de l'objet de données crypté associée au certificat de la clé de cryptage de l'objet de données dans l'entrée de la base de données,
ou
- mettre à disposition, par le serveur (200), la clé pour décrypter l'objet de données crypté associée au certificat pour la clé pour crypter l'objet de données dans l'entrée dans la base de données, pour récupération par le destinataire (240), le serveur supprimant la clé pour décrypter l'objet de données crypté après l'envoi ou la mise à disposition.

2. Procédé selon la revendication 1, dans lequel la clé de décryptage de l'objet de données crypté ou un lien pour récupérer la clé de décryptage de l'objet de données crypté est envoyé à une adresse de messagerie électronique du destinataire.

3. Procédé selon les revendications 1 à 2, dans lequel la clé de décryptage de l'objet de données crypté a une durée de validité prédéterminée, et dans lequel la clé est envoyée par le serveur au destinataire (240) ou mise à disposition pour être récupérée par le destinataire uniquement si le serveur (200) reçoit la requête pour la clé dans la durée de validité prédéterminée.

4. Procédé selon l'une quelconque des revendications 1 à 3, comprenant en outre:
- générer (310) par le serveur (200) de la clé de cryptage de l'objet de données et/ou de la clé de décryptage de l'objet de données, et
- envoyer (330) la clé de cryptage de l'objet de données à partir du serveur (200) vers le dispositif d'émission (210) ou mettre à disposition, par le serveur (200), la clé de cryptage de l'objet de données pour récupération par le dispositif d'émission (210).

5. Procédé selon l'une des revendications 1 à 4, dans lequel la clé de décryptage de l'objet de données crypté est une clé à usage unique et/ou dans lequel seul l'objet de données crypté peut être décrypté avec la clé de décryptage de l'objet de données crypté.

6. Serveur (200) comprenant:
- un ou plusieurs moyens pour mettre en oeuvre les étapes du procédé selon l'une quelconque des revendications 1 à 5.

7. Programme informatique comprenant:
- des instructions de programme amenant un équipement informatique (1) à exécuter les étapes du procédé selon l'une quelconque des revendications 1 à 5, lorsque le programme informatique est exécuté sur un processeur (100) de l'équipement informatique (1).
